(19) Europäisches Patentamt
European Patent Office
Office européen des brevets

(11) **EP 4 375 985 A1**

(12) **EUROPEAN PATENT APPLICATION**

(43) Date of publication:
**29.05.2024 Bulletin 2024/22**

(21) Application number: **23210132.9**

(22) Date of filing: **15.11.2023**

(51) International Patent Classification (IPC):
**G10H 1/00** (2006.01)   **G06N 3/08** (2023.01)
**G06N 3/09** (2023.01)   **G10H 3/18** (2006.01)

(52) Cooperative Patent Classification (CPC):
**G10H 1/0091; G06N 3/08; G06N 3/09; G10H 3/187;**
G10H 2210/315; G10H 2250/311

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.11.2022 US 202263425606 P**

(71) Applicant: **Neural DSP Technologies Oy**
**00150 Helsinki (FI)**

(72) Inventors:
• **JUVELA, Lauri Tuomas**
**00440 Helsinki (FI)**
• **GOTSOPOULOS, Athanasios**
**00270 Helsinki (FI)**

• **MIMILAKIS, Stylianos Ioannis**
**00650 Helsinki (FI)**
• **CASTRO BORQUEZ, Douglas Andres**
**00250 Helsinki (FI)**
• **MÄKINEN, Jaakko Viljami**
**00150 Helsinki (FI)**
• **PEUSSA, Aleksi Tapani**
**02110 Espoo (FI)**
• **DAMSKÄGG, Eero-Pekka**
**00530 Helsinki (FI)**
• **RAUHANEN, Kimmo Erik Antero**
**87970 Jormua (FI)**
• **SHERSON, Thomas William**
**RD2 Wanaka (NZ)**

(74) Representative: **WBH Wachenhausen**
**Patentanwälte PartG mbB**
**Müllerstraße 40**
**80469 München (DE)**

(54) **CONTROLLABLE AI MODEL FOR AUDIO SYSTEMS**

(57)     A neural network emulates a behavior of a reference audio system for at least two control settings. A process, for each control setting, receives control position data designating a select control setting of the reference audio system as conditioning for the neural network, communicates an input to the reference audio system and captures a target output, maps parameters of the neural network such that, responsive to the input, a neural output resembles the target output, scores by a loss function, a similarity of the neural network output compared to the target output of the reference audio system, and utilizes the similarity derived from the loss function to modify model parameters of the neural network. A graphical user interface enables a user to select a virtual control setting within the graphical user interface such that the neural network models the reference audio system at the corresponding control setting.

FIG. 1A

**Description**

CROSS REFERENCE TO RELATED APPLICATIONS

This application claims the benefit of U.S. Provisional Patent Application Serial No. 63/425,606, filed November 15, 2022, entitled "CONTROLLABLE AUDIO SYSTEM MODEL", the disclosure of which is hereby incorporated by reference.

BACKGROUND

FIELD OF THE DISCLOSURE

The present disclosure relates generally to robotics and to robotic systems for controlling electronic audio devices such as musical instrument amplifiers and effects. Aspects herein relate more particularly, to robotic systems that adjust settings of electronic audio devices for purposes of determining and/or collecting a responsive behavior of an associated audio system.

Aspects herein also relate to end-to-end modelling of audio systems, which can include one or more electronic audio devices, e.g., end-to-end modeling of musical instrument amplifiers and/or effects. In some embodiments, aspects extend from data collection to the construction of controllable models.

Furthermore, aspects herein relate to the inclusion of and/or use of models, including end-to-end models, in audio processing devices.

In this regard, still further aspects relate to the use of the above robotic systems in the above end-to-end modelling of audio systems, and to the inclusion of models created by robotic systems in audio devices, as set out in greater detail herein.

DESCRIPTION OF RELATED ART

Audio systems (such as, for example, audio amplifiers) exhibit different responses based on many different factors. For example, the behavior of an audio system can vary based on the settings of the controls provided by the audio system (e.g., volume, treble, and bass controls). Also, different audio systems provide different types and styles of controls. These differences can vary widely across different manufacturers. Yet further, the response of audio systems can vary based upon topology, technology (e.g., vacuum tube, solid-state, hybrid, etc.), input source, output device, environment, and a plethora of other factors.

SUMMARY

Aspects herein provide a process of creating a controllable responsive model of an audio system. The process comprises generating a neural network that emulates a behavior of a reference audio system for at least two control settings of the reference audio system.

In this regard, for each control setting, the process comprises receiving control position data designating a select control setting of the reference audio system as conditioning for the neural network. Additionally, for each control setting, the process comprises communicating an input to the reference audio system and responsive thereto, capturing a target output of the reference audio system. Yet further, for each control setting, the process comprises mapping parameters of the neural network such that, responsive to the input, a neural output resembles the target output of the reference audio system. Also, for each control setting, the process comprises scoring by a loss function, a similarity of the neural network output compared to the target output of the reference audio system. Still further, for each control setting, the process comprises utilizing the similarity derived from the loss function to modify model parameters of the neural network to improve the scored similarity.

The process also comprises associating the neural network with a graphical user interface that is configured to enable a user to select a virtual control setting within the graphical user interface corresponding to a select one of the at least two control settings of the reference audio system such that the neural network models the reference audio system based upon the corresponding selected control setting.

Aspects herein also provide a system defining a controllable responsive model of an audio system. The system comprises a first processing system configuration operatively programmed to generate a neural network that emulates a behavior of a reference audio system for at least two control settings of the reference audio system.

The first processing system configuration is programmed to perform, for each control setting, an operation that receives control position data designating a select control setting of the reference audio system as conditioning for the neural network. The first processing system configuration is further programmed to perform, for each control setting, an operation that communicates an input to the reference audio system and responsive thereto, captures a target output of the reference audio system. Also, the first processing system configuration is programmed to perform, for each control setting, an operation that maps parameters of the neural network such that, responsive to the input, a neural output resembles the target output of the reference audio system. Additionally, the first processing system configuration is programmed to perform, for each control setting, operations that score by a loss function, a similarity of the neural network output compared to the target output of the reference audio system, and utilize the similarity derived from the loss function to modify model parameters of the neural network to improve the scored similarity.

Yet further, a graphical user interface is associated with a second processing system configuration. Here, the graphical user interface is associated with the neural network to enable a user to select a virtual control setting within the graphical user interface corresponding to a select one of the at least two control settings of the reference audio system such that the neural network models the reference audio system based upon the corresponding selected control setting.

Aspects of the present disclosure further provide a system for creating a controllable responsive model of an audio system. The system comprises a data collection robot having a set of electric motors, each electric motor configured to attach to a corresponding relevant control of a reference audio system. The system also comprises an audio interface configured to play back audio to the reference audio system, and to record an output of the reference audio system. The system further comprises a controller coupled to the data collection robot and the audio interface such that that audio can be played and recorded via the audio interface while keeping track of control settings of the reference audio system as set by the data collection robot.

In this regard, the controller implements a data collection routine where the data collection robot moves controls of the reference audio system to a control setting within a control space of the controls of the reference audio system, the controller triggers playback of audio into the reference audio system via the audio interface, the controller captures the output of the reference audio amplifier via the audio interface, and the controller organizes data from the data collection robot and from the audio interface into training data to train a neural network.

Aspects of the present disclosure also provide robotic systems that automatically change settings of controls provided on audio systems. In some embodiments, a robotic system herein includes a device interface coupled to a control sequencer. The device interface adapts to one or more controls of the audio system that are to be changed. The control sequencer provides a control sequence to the device interface where each step in the sequence provides control value(s) that cause the device interface to vary the settings on the audio system.

In practical applications, a combination of sequence values of the control sequence can be used to generate samples that represent a responsive behavior of the audio system. For instance, a sufficiently high number of generated samples may accurately determine a responsive behavior of the audio system, at least across the range of settings of the audio system that are characterized by the control sequence. In this regard, the term "significantly high number of generated samples" should not be construed as limiting in any regard to a precise number of samples. Rather, one or more samples could qualify as a sufficiently high number of generated samples, depending for example, upon the range of controls to be sampled, desired accuracy, tolerable variance/desired precision, and other factors, examples of which are described in greater detail herein.

In some embodiments, the robotic system can also include a signal generator that provides an input signal to the audio system, and a receiver that receives an output signal from the audio system. The output signal represents the response of the audio system to the input signal at the current control settings. Thus, by applying an input signal that varies across a range of expected inputs to the audio system (e.g., typically sweeps across variations in amplitude and/or frequency) at the input, the robotic system measures a response of the audio system via the output at each setting. Moreover, by stepping through the control sequence iteratively and by collecting a response of the audio device at each iteration, a responsive behavior of the audio system can be collected across different settings of the audio system.

In some embodiments, the sequence values within the control sequence are sorted, ordered, organized, or otherwise sequenced to affect a designated parameter. The designated parameter may be to reduce or minimize the time required to collect samples, to reduce or minimize wear on the controls of the audio system under test, to collect the widest variance in anticipated results early in the data collection process, to carry out the data collection process in some ordered or organized manner, e.g., by processing in batches, etc. For instance, the values within the control sequence can be organized such that the controls on the reference audio system are or are not manipulated in a non-linear or non-stepwise manner.

Aspects of the present disclosure also provide robotic systems and automated processes for determining responsive behaviors of audio systems (e.g., audio amplifiers, audio processors, audio devices (such as effect pedals), passive circuits, speaker cabinets, environments, etc.). An embodiment comprises a robotic system that automatically changes settings on an audio system and provides an input to the audio system at each of the changed settings. The robotic system measures a response at each setting. The embodiment of the robotic system also comprises a control sequencer that provides control sequences. Each control sequence changes at least one variable associated with the audio system. In illustrated examples, the control sequence(s) can correspond to an audio system control (e.g., volume, bass, drive, treble, other control that affects a collected output of the audio system, combinations thereof, etc.), with each of the individual control sequences having its own sequence values. The sequence values correspond to valid predetermined control settings for that control. A combination of the sequence values (e.g., all of the sequence values or a subset thereof, from all the control sequences) represents a sufficiently high number of samples that are used to determine a responsive behavior of the audio system, e.g., at least across the range of settings characterized by the control sequence(s).

In some embodiments, the combination of sequence values from the control sequences is generated in a non-linear or non-stepwise manner. By way of example, sequence values can be derived from a random sampling process, e.g., a sufficiently dense random sampling process.

As a robotic system, some embodiments comprise motor controllers that control motors. The motor controllers receive the sequence values from the control sequencer. Each sequence value is received iteratively and is converted to a corresponding motor setting.

The robotic system further comprises control couplers that couple (or are otherwise adapted to be coupled) to the motors to affect measures of the response of the audio system. For instance, the control couplers can couple to audio system controls, thereby allowing the motors to change control settings of the audio system. In other embodiments, the control couplers can control the movement or positioning of a microphone collecting the response of a speaker, e.g., affecting movement along one or more axes, moving a recording device that collects an environment of the audio system, etc.

Yet further, in some embodiments, a signal generator provides an input signal to the audio system and a receiver receives an output signal from the audio system. The output signal represents the response of the audio system to the input signal at the control setting(s).

Other systems, devices, methods, features, and advantages will be or become apparent to one with skill in the art upon examination of the following drawings and detailed description. It is intended that all such additional systems, methods, features, and advantages be included within this description, be within the scope of the present disclosure, and be protected by the accompanying claims.

BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.

FIG. 1A is a block diagram illustrating various components that can be used for building and/or using a neural network that models a reference audio system;

FIG. 1B is a block diagram of a neural training scheme;

FIG. 1C is a flow chart illustrating process of creating a controllable responsive model of an audio system;

FIG. 2 is a chart showing one embodiment of control sequences that are provided by a control sequencer in a robotic system for determining a responsive behavior of audio systems.

FIG. 3A is a diagram showing an embodiment of mechanical components in the robotic system for determining a responsive behavior of audio systems.

FIG. 3B is a diagram showing another embodiment of mechanical components in the robotic system for determining a responsive behavior of audio systems.

FIG. 4 is a diagram showing an enlarged view of an embodiment of the motor of FIG. 3.

FIG. 5 is a diagram showing an embodiment of a robotic system that is operatively coupled to an audio system to measure the responsive behavior of the audio system.

FIG. 6 is a table showing example numerical values that represent mechanical wear for different numbers of controls when regular grid sampling is employed for five (5) equally spaced control values.

FIG. 7 is a table showing example numerical values that represent mechanical wear for different numbers of controls when regular grid sampling is employed for eleven (11) equally spaced control values.

FIG. 8 is a table showing example numerical values when a sufficiently dense sorted path of random samples is employed instead of the regular grid sampling of FIGS. 6 and 7.

FIG. 9 is a graph that visually illustrates mechanical wear as a function of the number of samples for different numbers of controls.

FIG. 10 is a table showing average travel across all pairs of consecutive values for a regular grid sampling with five (5) equally spaced control values.

FIG. 11 is a table showing average travel across all pairs of consecutive values for samples that are generated from a sufficiently dense random sampling process.

FIG. 12 is a block diagram showing components of a robotic system according to aspects of the present disclosure.

DETAILED DESCRIPTION OF THE EMBODIMENTS

Digital amplifier modelling is the process of recreating the behavior of a reference audio system, e.g., a musical instrument amplifier, speaker system, effects, or combinations thereof, in a computer program. In some contexts, a digital model should recreate a response of a reference audio system to user input in a way that is perceptually indistinguishable from the reference audio system itself, both in terms of sound and feel.

Aspects herein provide a data-driven approach to creating digital models of audio systems. Some embodiments provide a data-driven approach to creating real-time neural network models of audio systems, e.g., electronic musical instrument amplifiers, effects, speaker systems, combinations thereof, etc., thus recreating the audio system's sonic response. In some embodiments, the response may be limited or restricted, e.g., limited input, restricted to less than all the controls present on a physical device, limited to modeling less than all of the channels on a physical device, limited in a range on one or more controls, etc. In other embodiments, the response can encompass arbitrary inputs, the full range of controls, arbitrary inputs at the full range of controls, combinations thereof, etc.

Audio systems behave differently based on many different factors. For example, the behavior of an audio system can differ based on the settings of the controls (e.g., volume, treble, bass) provided on the audio system. In this regard, audio system controls (and hence, the audio system settings) are frequently adjusted to obtain a desired sound effect for a given application/input source.

Moreover, the controls of many audio systems are interactive, such that adjusting one or more controls can have an unusual or unexpected impact on the tone of the output. For instance, in a physical amplifier circuit, complex interactions take place between reactive elements, such as capacitors and inductors, and non-linear elements, such as vacuum tubes, transistors, and diodes. These non-linear interactions constitute a dynamic system and are sometimes largely responsible for the desired sonic characteristics of the reference audio system.

As such, collecting a response of an audio system at a single setting is not likely to be representative of how an audio system reacts across a range of settings. Moreover, collecting a response of an audio system at a single setting is not likely to be representative of how an individual, e.g., a musician, interacts with a physical instance of the audio system.

Because of this, aspects herein provide a robotic system that can collect a response of an audio system across different settings. Such information can lead to understanding how a particular audio system behaves in response to different types of inputs at different settings. Moreover, the response collected across various settings can be utilized to generate a responsive model that more accurately reflects interactions with a corresponding audio system. In this regard, a responsive behavior is collected that reflects differences in the audio system at different control settings.

In this regard, a "responsive" model is a model that is trained using training data collected from the same reference audio system at two or more control settings within a control space, e.g., two or more control positions of a single control (e.g., a tone control, gain control, equalization control, etc.). A responsive model may alternatively be trained on two or more different settings applied generally across multiple controls, etc. For instance, given a control space defined by a volume, treble, middle, bass, and gain knobs, training data can be generated from the reference audio system at two different control space settings where any one or more of the volume, treble, middle, bass, and gain knobs can be adjusted between a first training set and a second training set. In this regard, a responsive model is not merely a static snapshot of the reference audio system at a single selected setting. Rather, the training data allows the responsive model to change behavior/output in a manner informed by analogous changes to the reference audio system.

A controllable responsive model is a responsive model that a user can interact with, e.g., via a graphical user interface (GUI) associated with the model, such that changes made to a virtual control (or controls) in the GUI modifies the behavior of the controllable responsive model in a manner informed by analogous changes to the reference audio system.

An "end-to-end" model is one where training data captures samples of the reference audio system at different control settings such that at least two settings of one or more controls, define desired bounds (e.g., minimum and maximum responses) of behaviors/outputs that the model is expected to cover. For instance, training data that captures the full range of one or more controls is an example of an "end-to-end" model. Here, "end-to-end' does not require obtaining training data on every possible combination of settings.

As used herein, an audio system can comprise a musical instrument amplifier (such as a guitar amplifier, bass guitar amplifier, keyboard amplifier, etc.), one or more effects processors, effect pedals, pre-amplifiers, signal processing devices (e.g., an equalizer, compressor, limiter, noise gate, pitch shifter, expander, filter, etc.), speaker cabinet(s), other device(s) that process one or more audio signals, combinations thereof, etc. Typically, such audio systems will include one or more controls. Each control provides two or more settings that affect operation of the audio system. Often, such controls are implemented by an electrical-mechanical device such as a potentiometer, encoder, linear/slide potentiometer, switch, rotary switch, push button, etc.

In some instances, the control can be "virtual", e.g., implemented as a software object on a graphical user interface (e.g., touchscreen). In this instance, the control may be generalized as a "widget". Also, some controls may rely upon an electrical input (e.g., a control may be a connector for receiving control messages such as Musical Instrument Digital Interface (MIDI) messages, an expression pedal input, a control voltage input, or other means).

In yet other example embodiments, an audio system can comprise a speaker cabinet that is sensitive to microphone placement when collecting the output of the speaker cabinet. Here, moving the microphone affects how the speaker cabinet is perceived. Similarly, moving a microphone in an environment affects how the audio system is perceived in the environment.

Regardless of the above, as used herein, a "control" of an audio system is any adjustable feature, whether physical (e.g., requiring physical movement, physical connection to, physical contact, proximity to, combinations thereof, etc.), virtual (e.g., "soft" control implemented via a touch display, implemented via a graphical user interface, etc.), electrical (controlled via electrical signals), optical (controlled via light), and whether user-adjustable (e.g., physically adjustable) or whether adjustable electrically, to affect operation of the audio system.

Moreover, as used herein, with reference to a control, a "setting" comprises a particular state of an associated control. For instance, a potentiometer that functions as a volume control can have a range of settings from a minimum potentiometer position to a maximum potentiometer position. This range of positions is often generalized across a simplified set of values, such as 0-10, etc. A push button switch may have only two settings, whereas a rotary switch can have multiple discrete settings (e.g., 6 or more settings).

In some embodiments, a setting of a control can be defined across the entirety of the valid positions of the control. In other embodiments, a setting can be limited to a range of valid positions, e.g., a sweep from a predetermined minimum value to a predetermined maximum value. In some example embodiments, settings can have an "imposed" range, e.g., that is defined by the limits of the robotic system, or are otherwise defined by deliberate and intended limitations to a range of settings. For instance, recording a speaker cabinet, a predefined minimum and maximum microphone distance can be defined, e.g., based upon practical limits of the microphone or environment. For a potentiometer acting as a volume potentiometer, an artificial minimum value may be set (e.g., to a value of 1) because a setting of "off' or zero may result in no sound from the audio system. Other examples are possible.

With reference to a "setting" when referring to an audio system, a setting is a particular state of each control of interest that is associated with the audio device. In certain applications, some controls and/or control parameters may be considered "don't care". For instance, in a multi-channel amplifier, where only one channel is being evaluated, the controls of the non-evaluated channels can be "don't care" controls. In this context, "setting" when referred to an audio system means, those controls of an audio system that are of interest.

According to aspects herein, an approach to emulate the responsive behavior of a particular audio system comprises measuring responses of the audio system at various audio system settings. In some embodiments, the measurement is carried out at each (or substantially all) of the audio system's settings. In other words, each individual control (e.g., volume control, bass control, treble control, gain control, presence control, contour control, bright switch, etc.) is changed incrementally and a response is measured for each of the individual settings.

In some embodiments, controls such as potentiometers are continuous. However, this does not imply that an infinite number of training data sets are required to accurately reflect the behavior of a reference audio system in the neural network model. For instance, limitations in the auditory perception of a listener can affect the amount of adjustment in a control necessary to derive a perceptual difference. Such can be taken into account to limit the amount of training data. Moreover, in some embodiments, approximations, estimations, interpolations and other techniques can be used to imply settings for which training data was not provided. Here, the desired accuracy of the model as compared to the reference audio system may dictate the amount of desired training data.

While a measurement at each (or substantially all) of an audio system's settings may be suitable for simple audio systems, (e.g., a small number of controls such as one potentiometer and one switch), this approach becomes problematic for audio systems with many controls.

As one can imagine, for an example audio system with five (5) controls such as potentiometers (which is somewhat common in the guitar and bass amplifier industry), if each control has ten (10) possible settings of interest to be evaluated, then the total number of settings necessary to determine a full responsive behavior would be 100,000 individual measurements (one at each setting). Further, for linear (non-stepped) devices such as potentiometers, the range from a minimum value to a maximum value can be broken down into more than 10 possible positions, depending upon the desired resolution.

Equally problematic as (or even more problematic than) the time required for all these measurements is the repetitive and mechanical wear on the components. Because a response of the audio device can be measured at each unique setting, the audio system settings must be changed in direct proportion to the number of controls (e.g., potentiometers sliders, toggle switches, multi-way switches, concentric potentiometers, push-pull potentiometers, rotary encoders, foot switches, etc.,) and the number of settings for each control. Thus, again using an example audio system having a 5 potentiometer; 10 settings each potentiometer example configuration, at least 100,000 unique control settings would be required.

What is not readily apparent is that a systematically iterative approach results in uneven wear of components. Keeping with the above example, for each turn of a first potentiometer, a second potentiometer would require a minimum of ten (10) turns. Likewise, for each turn of the second potentiometer, a third potentiometer would require a minimum of ten (10) turns; and so on. Thus, mathematically, the fifth potentiometer experiences a 10,000-fold number of turns as compared to the first potentiometer. If the controls are implemented with potentiometers, then each control of the audio system has a limited usable life because potentiometers (which include mechanical components) have a finite number of duty cycles before malfunctioning. As such, the durability of the audio system becomes dependent on the most vulnerable component, namely, the potentiometer in this example, that has been turned 10,000-fold. In practical instances, some audio systems can include 20-30 user-adjustable controls, exacerbating the above even further.

To address the drawback of determining a responsive behavior of an audio system by taking nearly unmanageable numbers of measurements over long periods of time at the cost of excessive wear-and-tear to components, aspects of the present disclosure provide robotic systems and automated processes for determining responsive behaviors of audio systems without using every setting on the audio system.

Aspects herein thus describes a data-driven approach, e.g., using a data collection pipeline, to creating controllable real-time neural network models of audio systems such as guitar amplifiers, recreating the underlying reference audio system's (e.g., amplifiers') sonic response to arbitrary inputs across a range of controls present on the physical device. For instance, aspects herein describe a conditioned black-box approach by training a Long Short-Term Memory (LSTM) model.

Example Modeling

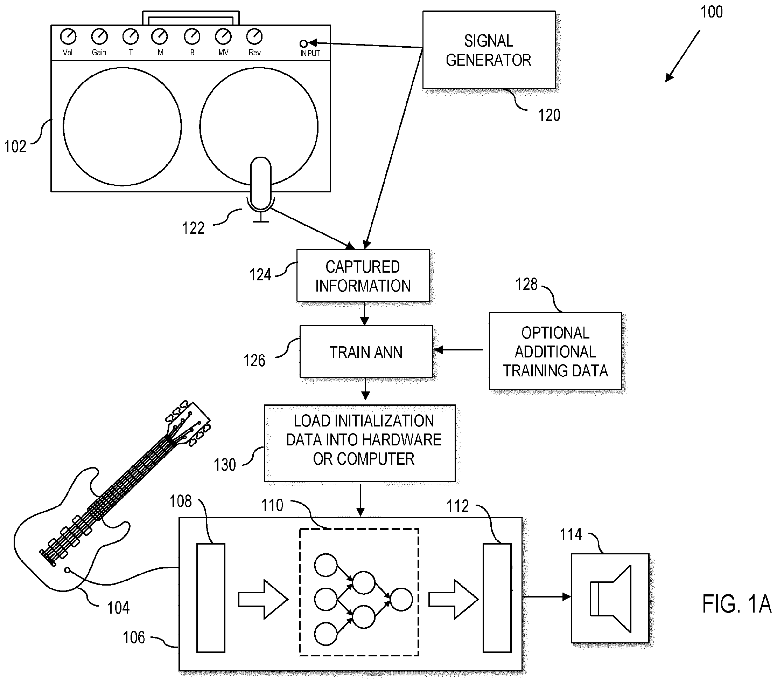

Referring now to the drawings, and in particular to FIG. 1A, a block diagram 100 illustrates various components that can be used for creating, constructing, editing, using, combinations thereof, etc., a neural network system to virtualize an audio system. For sake of clarity of explanation, the embodiment of FIG. 1A is described in the context virtualizing a reference audio system 102 that is implemented as a guitar amplifier.

Notably, it may not always be desirable or practical to use the reference audio system 102, e.g., when performing. However, aspects of the present disclosure provide a virtualization of the reference audio system 102 that can be used in lieu of the reference audio system 102.

More particularly, as shown, a user (e.g., musician) plugs an output of an instrument 104 (e.g., electric guitar) into a modeling audio system 106 that models at least some of the characteristic behavior of the reference audio system 102. In practical terms, the modeling audio system 106 will comprise some form of analog circuitry, digital circuitry, and software (e.g., a dedicated hardware unit or a general purpose computer in combination with an audio interface). For instance, within the modeling audio system 106, the instrument signal is processed through an analog to digital converter 108 (ADC) that converts the analog audio signal into a digital signal equivalent. The digital signal is input into a virtualization 110 that is specifically trained or otherwise programmed to mimic some or all of the characteristics of the reference audio system 102. The output of virtualization 110 is processed by a digital to analog converter 112 (DAC) that converts the digital output into an analog signal equivalent of the processed output, and the analog output is coupled to an amplifier/speaker 114 where the sound of the signal is produced.

Here, the dedicated hardware unit also includes one or more processors (e.g., digital signal processors), memory, control architecture, buffers, input/output circuitry (I/O), a display (e.g., a touchscreen or other display), a graphical user interface (GUI), and other hardware and software necessary to carry out that described more fully herein.

For instance, as will be described in greater detail herein, modeling of the reference audio system 102 is carried out using at least one artificial neural network that models the behavior of the reference audio system 102 at one or more settings. In some embodiments, modeling of the reference audio system 102 is carried out using at least one artificial neural network that models the behavior of the reference audio system 102 in at least two settings. In other embodiments, the modeling captures the response of the reference audio system 102 across many settings (e.g., all or substantially all settings). As such, aspects herein define a neural modeler of audio systems that is capable of creating neural network models that represent a real-world reference audio system that includes user adjustable controls. In practical applications, the virtualization 110 includes a model and at least one initialization file (referred to herein as a neural model file). When the neural model file is loaded into the model, the model becomes specifically configured such that the model output resembles a corresponding reference audio system. In this regard, the model can be extended to resemble different reference audio systems, e.g., different makes and/or models of amplifiers, by loading different neural model files into the model, each neural model file corresponding to a different reference audio system.

The virtualization 110 can also include additional functionality to carry out processing that is extrinsic to the reference audio system 102. For instance, the virtualization 110 can include a user interface that enables a user to select emulations of different speakers, speaker cabinets, dynamics processing, effects processing, equalization, etc., that is not within the native capability of the reference audio system 102. Such processing can be consistent across multiple neural model files (e.g., to implement a common set of interface options). As another example, such processing can vary based upon the loaded neural model file, combinations thereof, etc.

For sake of introduction and clear explanation, an example way to train an artificial neural network is to capture and use information from the reference audio system 102 itself. In the illustrated example, a sound source 120 (e.g., a sweep generator, audio file playback device, combination thereof, etc.) couples a test signal into an input of the reference audio system 102. The output of the reference audio system 102 is captured (e.g., via a microphone 122, direct signal out capture, or via other capture device) to define captured information 124 representing one or more samples collected from the reference audio system 102. The captured information can also include a capture of the test signal generated by the sound source 120, e.g., where such information is not otherwise available.

The captured information 124 of the reference audio system 102 (across one or more settings) is utilized either as training data, or to generate training data to train an artificial neural network at 126 so as to model the reference audio system 102. For instance, in some embodiments, the captured information 124 (e.g., output of the reference audio system 102 and/or the test signal) is processed, e.g., by collecting a set of features such as signal processing measurements, which are stored in memory for further use. In this regard, feature extraction from the captured information 124 may be considered a pre-training operation to generate training data.

In some embodiments, other training data 128 can optionally/additionally be used in addition to or in lieu of the training data derived from the captured information 124 to train the artificial neural network at 126. The other training data 128 may be already sorted into feature sets so that the data can be directly applied as training data. In other example implementations, the other training data may include audio such as additional test signals, prerecorded samples, real-time generated audio signals such as samples of an instrument played through the reference audio system 102, noise, etc. Here, the pre-training step of feature extraction should be carried out to prepare the optional additional training data 128 for use to train the artificial neural network 126.

With necessary pre-training operations performed, training is carried out on the artificial neural network at 126. In an example embodiment, the artificial neural network is comprised of neurons (mathematical functions) where each neuron has any number of inputs. A weight vector is defined based upon the number of inputs to each neuron. Thus, each neuron has a corresponding weight vector. These weights are fixed when the training is complete (e.g., at which time, the artificial neural network is ready for use in a manner that models at least one characteristic of an output of the reference audio system 102). However, during training, these weights are adjusted to tune the artificial neural network. Regardless of the training technique used, the artificial neural network 126 can be trained to derive a set of weight vectors with appropriate values such that the overall output of the artificial neural network converges towards an output representative of the reference audio system 102. Moreover, the training can result in the creation of a neural model file 130.

With the artificial neural network trained at 126, a process can store, archive, save, load, etc., the neural model file 130 (e.g., an initialization file) created as part of the training process. In practical embodiments, the neural model file 130 includes sufficient data such that that when read out and processed by the modeling audio system 106, a functioning model of the reference audio system 102 is realized. Thus, for example, the neural model file 130 can include some or all of the parameters required by the model, such as weights, weight vectors, information about the model structure and size, meta data, audio-related parameters (e.g., sample rate etc.), combinations thereof, etc.

Thus, as used herein, the artificial neural network 126 is a computing system, i.e., a network of nodes, which implements a model that can be trained (learn how to simulate) or is otherwise programmed (e.g., configured by the neural model file 130) to simulate the performance of the reference audio system 102 across one or more settings.

By contrast, the virtualization 110 is the system that is being used in lieu of reference audio system 102. In this regard, the virtualization 110 can be the artificial neural network 126, such as where the modeling audio system 106 itself is used to build the neural network as described above. The virtualization 110 can alternatively include a copy of the artificial neural network 126 or a variation thereof, such as where a separate device independent of the modeling audio system 106 is used to build the artificial neural network 126. Here, the virtualization 110 can include a specific neural network, e.g., the artificial neural network 126, or the neural network can have a general framework that enables the modeling audio system 106 to model different reference amplifiers by loading an associated neural model file 130 into the modeling audio system 106 for each reference audio system to be modeled.

In some embodiments, the virtualization 110 can also include other capabilities. For instance, the virtualization 110 can include metadata, initialization data, executable code to carry out additional processing (effects, virtual tone controls, and other signal processing) to make the device more flexible and usable.

In some embodiments, the modeling audio system 106 is essentially the entire circuitry including conversion circuitry (e.g., ADC and DAC) the virtualization 110, optional additional signal processing, e.g., other processing not provided by the virtualization 110, etc. Here, the modeling audio system 106 (e.g., dedicated hardware or computer and audio interface) can include a graphical user interface, user interface, virtual controls, physical controls, etc., to make the system flexible and usable as a tool for a musician.

Notably, an artificial neural network forms a core component of the modeling audio system 106 that is suitable for use in real-time applications. Thus, the modeling audio system 106 is capable of processing audio in the time domain (i.e., the input and the output of the neural network correspond to time domain audio signals).

Training is conceptually illustrated in FIG. 1A outside the modeling audio system 106 solely for clarity of example. In practical applications, training the artificial neural network 126 can occur within the modeling audio system 106 itself. For instance, the modeling audio system 106 can include the sound source 120, e.g., signal generator, means (e.g., built in microphone, audio input, etc.) to capture the output of the reference audio system 102, and other inputs, outputs and processing necessary to implement training as described more fully herein. Moreover, the modeling audio system 106 can include memory to store one or more files so that the modeling audio system 106 can be controlled by a user to load any practical number of alternative reference audio systems (e.g., guitar amplifier virtualizations). In other embodiments, initialization files (e.g., neural model files 130) representing various reference audio systems can be created external to the modeling audio system 106, and can be loaded into memory of the modeling audio system 106. In this way, users can create and share virtualizations.

Data Driven Amplifier Modeling At Multiple Settings of Controls

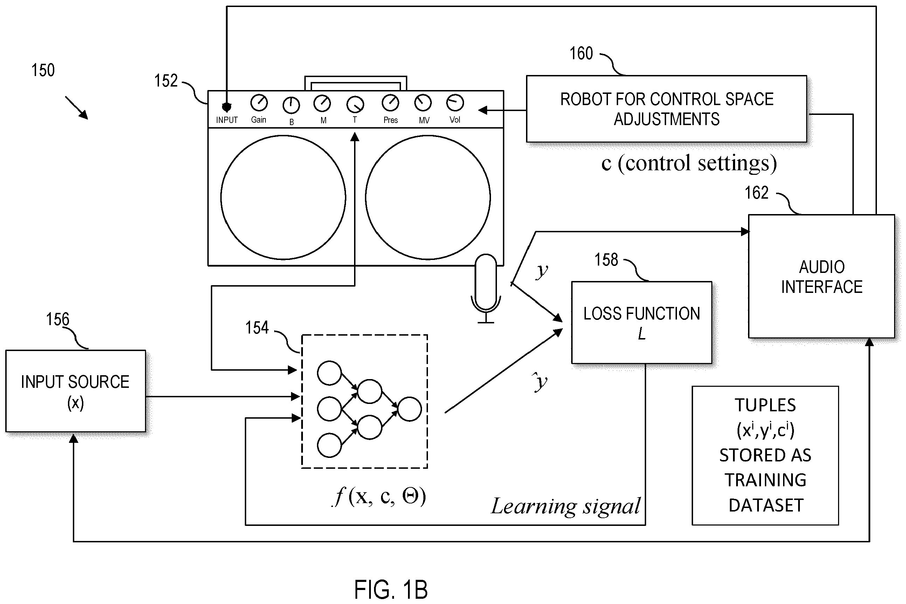

Referring to FIG. 1B, a modeling environment 150 is illustrated, which can be utilized to implement a training scheme, e.g., for use by the system described with reference to the block diagram 100 of FIG. 1A. The modeling environment 150 includes a reference audio system 152 (e.g., reference audio system 102, FIG. 1A), a model 154 (e.g., which can be derived from the ANN training process 126 and/orvirtualization 110, FIG. 1A), an input source 156 (e.g., signal generator 120, FIG. 1A), and a loss function 158 (also referenced as loss function L).

In an example embodiment, the reference audio system 152 and the model 154 (also referenced as model f) receive an input (x) from the input source 156 (e.g., either directly or via an audio interface 162 that includes a digital to analog converter). Also, the model 154 receives control positions c of the reference audio system 152 as conditioning data. Here, the control positions represent the various positions/settings of the controls within the control panel of the reference audio system 152, e.g., the knob positions for the Gain, B (bass), M (mid), T (treble), Pres (presence), MV (master volume), and Vol (volume) of the reference audio system 152, as illustrated. These control positions can be manually entered, the control positions can be generated by an automated process (e.g., by a robot), or the values can be otherwise derived.

The reference audio system 152 outputs an output signal. More particularly, as schematically illustrated, the reference audio system 152 outputs a target output signal y representing a response of the reference audio system 152 to input signal x at control settings c (schematically illustrated by the knob positions for the Gain, B (bass), M (mid), T (treble), Pres (presence), MV (master volume), and Vol (volume) of the reference audio system 152.

Analogous to that of FIG. 1A, the target output signal can be captured by a microphone, transducer, etc., the target output signal can be collected as an electrical output of the reference audio system 152, or the target output signal may otherwise be derived. Regardless, the target output signal can be captured as a digital signal, or as an analog signal that is converted to a digital signal.

The modeling system maps the input signal x to the model f (x, c, $\Theta$) so as to produce a model output signal $\hat{y}$ that is modeled to resemble the target output signal y. A loss function 158 (L) is utilized to score a similarity of model output $\hat{y}$ to an output of the reference audio system y. Moreover, the loss function can be used as a learning signal to adjust model parameters to improve the accuracy and resemblance of the model to approximate the reference audio system.

Although FIG. 1B only shows one set of settings c, (one set of knob positions on the reference audio system 152) in practice, multiple different settings c, c', c'', etc., (i.e., multiple different knob positions) can be modeled. In this regard, the collection of different settings combinations is referred to as a control space. Thus, uniquely, this system captures training data for the same reference audio system 152 at multiple control settings (in the same virtualization/model) so that the model more accurately outputs a sound that is like the reference audio system 152 at corresponding control settings (as opposed to merely taking a snapshot of the reference audio system 152 at a particular setting).

In an example configuration, the overall goal of modeling is to capture the full range of a reference audio system's response (e.g., to capture in the model, training data that covers the range of each control on the reference audio system). In this regard, the capture can include a response to any given audio input. Moreover, the captured response can enable adjustment (even continuous adjustment) of the reference audio system's controls, which can include controls such as potentiometers switches, encoders, etc.

In another example configuration, aspects herein sample the control space of a reference audio system at a discrete collection of control positions. In this configuration, a neural network model is trained to learn and generalize a continuum, which may include control positions for which no training data was collected, e.g., via inference, interpolation, abstraction, prediction, etc.

By way of illustration, a single training example in a dataset can contain variables including $x^{(i)}$, $y^{(i)}$, and $c^{(i)}$.

In this example, $x^{(i)}$ defines an input audio segment. In some embodiments, the input audio can include guitar playing, bass playing, or other suitable training audio input.

Also, $y^{(i)}$ defines a recorded output of the reference audio system 152 in response to the input $x^{(i)}$. As noted more fully herein, the variable , $y^{(i)}$ is used as a target for comparison with a corresponding model output $\hat{y}^{(i)}$.

Still further, $c^{(i)}$ defines control values describing the reference audio system settings at a given instance, e.g., an array of variables that collectively define a current set knob and switch positions. By way of example, a current set of settings for an amplifier with bass, middle, treble, and volume, could include values such as Bass adjusted to 7/10 (knob turned to the 2 o'clock position); Middle on 3/10 (knob turned to the 9 o'clock position); Treble at 10/10 (knob turned to the 5 o'clock position); and Volume at 5 (knob turned to the 12 o'clock position). A second set of control values could describe the above controls where at least one control (e.g., a control potentiometer, encoder, switch, etc.,) is in a different position.

These variables are grouped together as a triple, e.g., (x(i), y(i), c(i)) to constitute the i-th training example in a dataset. Here, the variable c(i) can itself be an array corresponding to control settings for the triple.

Thus, in this example configuration, the collection of N training examples forms the dataset D as

$$\mathcal{D} = \left\{ \left( \mathbf{x}^{(1)}, \mathbf{y}^{(1)}, \mathbf{c}^{(1)} \right), \ldots, \left( \mathbf{x}^{(N)}, \mathbf{y}^{(N)}, \mathbf{c}^{(N)} \right) \right\}_{i=1}^{N}.$$

In some embodiments, the control values can either be continuous, such as when representing a knob position. The control values can also be discrete, such as when representing a switch position. Furthermore, the controls can be time-varying. Here, time-varying controls typically change at a much slower rate than the audio rate signals.

In the illustrative example, the model is a neural network where x and c are inputs, and the model is parameterized by θ, i.e., $\hat{y} = f(x, c; θ)$.

Additionally, a loss function $L(\hat{y}, y)$ is utilized. As noted above, the loss function 158 measures the discrepancy between the model predictions $\hat{y}$ and target output of the reference audio system y. As a further example, a learning approach, e.g., a standard supervised learning with stochastic gradient descent, can be utilized to learn the network parameters θ that minimize the average loss over the training set:

$$\boldsymbol{\theta}^* := \arg\min_{\boldsymbol{\theta}} \frac{1}{N} \sum_{i=1}^{N} L(f(\mathbf{x}^{(i)}, \mathbf{c}^{(i)}; \boldsymbol{\theta}), \mathbf{y}^{(i)}).$$

Given a sufficiently large and representative training set, and an appropriate model, the model generalizes to inputs that have values outside the training set. Moreover, the model learns to interpolate the behavior of control settings that are outside those found in the training data.

Automated Data Collection - Introduction

According to aspects herein, musical instrument amplifier modeling is provided, which facilitates adjusting and recording the control positions/settings in a given control space in a manner that exhibits a degree of precision, consistency, and repetitiveness. Such a task is not typically feasible for a human operator, especially as the number of controls of a reference audio amplifier scale. For instance, the time required, number of iterations, and precision of the iterations make it difficult to impossible for a human to precisely measure the control space of even a simple (e.g., a few controls) musical instrument amplifier. However, according to aspects herein, the task of managing the control spaced is delegated to robotics.

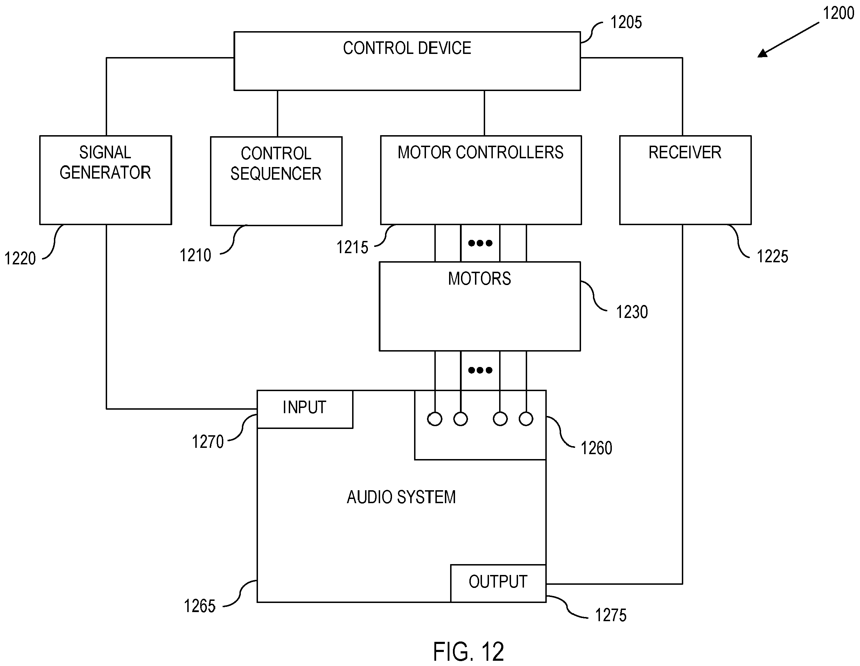

As will be described in greater detail herein, in example embodiments, an optional robot 160 provides electric motors that are attached to each relevant control of a reference audio system 152, e.g., a physical amplifier. A controller (described with reference to FIG. 12) of the robot controls the motors to set the knobs on the reference audio system 152 to any configuration with extreme precision. In some embodiments, the positions of each control on the reference audio system 152 are set by the robot 160, thus each value of c is known by the robot, facilitating automated systems for passing the values of c to the modeling system.

In some embodiments, the robot 160 is connected to an audio interface 162. The correlation between the robotics and the audio interface enable audio to be played and recorded while keeping track of the knob positions. Thus, a tight correlation is captured between input audio, control settings of the reference audio system, and an output of the reference audio system responsive to the input audio at the control settings. Thus, this example configuration allows automated assembly of the above-described tuples for the training set, and/or other forms of data collection and storage involving parameters, states, inputs, outputs, etc., characterizing the reference audio system 152.

In an example embodiment, during data set collection, the robot 162 moves the controls to different positions, whereupon the system plays audio through the reference audio system 152, and the system records the output of the reference audio system. Example audio material to the reference audio system (e.g., amplifier) can include, for example, a collection of guitar, bass, synthetic recordings, combinations thereof, etc., which are randomly sampled for each training segment. In some embodiments, the input audio is selected to exhibit as much variation as possible. In other embodiments, the input audio is selected to be representative of the different types of signals that are expected to be played through the reference audio system 152 and/or the model 154, with as much variation as practical.

By way of example, training examples may be recorded in conjunction with the data collection robot 160. Each example in the dataset may comprise, for example, a pair of one second long input-target audio segments, sampled at 48 kHz. The control positions c can be kept constant over each segment, and stored together with the audio, e.g., as a tuple. In an example embodiment, input audio sequences are be drawn randomly from a collection of guitar and bass recordings, sound files, chirps, sweeps, etc. The dataset totals may generate up to or exceeding 4.5 hours of stereo paired audio, which can be further randomly split into training and validation samples, e.g., 15000 training and 1000 validation examples in a working embodiment.

Example System

Referring to the FIGURES generally, a system defining a controllable responsive model of an audio system, comprises a first processing system configuration (e.g., ANN training process 126, FIG. 1A, modeling environment 150, FIG. 1B, a general purpose computing system, etc.) operatively programmed to generate a neural network (e.g., see 110, 126, FIG. 1A; 154, FIG. 1B) that emulates a behavior of a reference audio system for at least two control settings of the reference audio system. As used herein, the "responsive model" is referred to herein as responsive because, as will be described in greater detail herein, a user can interact with the system to change parameters that affect the model to adjust between at least two different control settings of the reference audio system (as compared to working with a single snapshot of the reference audio system).

The processing system is programmed to perform for each control setting, operations that:

receive control position data designating a select control setting of the reference audio system as conditioning for the neural network,
communicate an input to the reference audio system and responsive thereto, capture a target output of the reference audio system,
map parameters of the neural network such that, responsive to the input, a neural output resembles the target output of the reference audio system,
score by a loss function, a similarity of the neural network output compared to the target output of the reference audio system, and
utilize the similarity derived from the loss function to modify model parameters of the neural network to improve the scored similarity.

The system also comprises a graphical user interface associated with a second processing system configuration (e.g., modeling audio system 106, FIG.1A, general purpose computer, etc.), the graphical user interface associated with the neural network to enable a user to select a virtual control setting within the graphical user interface corresponding to a select one of the at least two control settings of the reference audio system such that the neural network models the reference audio system based upon the corresponding selected control setting. For instance, the neural network may model the reference audio system at the corresponding selected control setting, or at a synthesized setting that is based, at least in part, upon the selected control setting.

In some configurations, the first processing system configuration is implemented by a computer system, and the second processing system configuration is implemented in a second computer system that is different from the first computer system. For instance, the second computing system can comprise a dedicated hardware guitar effects processor (e.g., modeling audio system 106, FIG. 1A) that enables an instrument to be plugged directly therein for performing using the neural network at the user selected control setting.

In a practical application, the reference audio system includes at least two controls, each control capable of at least two control settings. Here, the first processing system configuration generates the neural network that emulates the behavior of the reference audio system for at least two control settings by generating the neural network to emulate the behavior of the reference audio system in at least two control settings, optionally up to at least two control settings for each control of the reference audio system.

In some configurations, the reference audio system generates the neural network that emulates the behavior of the reference audio system by executing code that samples a control space at a discrete collection of control positions for each control of the reference audio system, and trains the neural network to learn to generalize a continuum of control positions between a minimum discrete control position and a maximum discrete control position for each control.

In some configurations, the first processing system configuration further combines a random sampling procedure with an optimized sorting approach to determine the at least two control settings of the reference audio system, generates all measured control configurations ahead of time into a list, and utilizes a sorting of the list that is designed to minimize the overall distance travelled.

Moreover, in some example configurations, the first processing system configuration further generates nodes as a list of knob-positions-to-visit by random sampling (where each knob-position-to-visit corresponds to a select node), creates a distance matrix that is formed pair-wise for the nodes, and approximates a traveling salesman solution on the distance matrix.

Example Process of Creating a Controllable Responsive Model of an Audio System

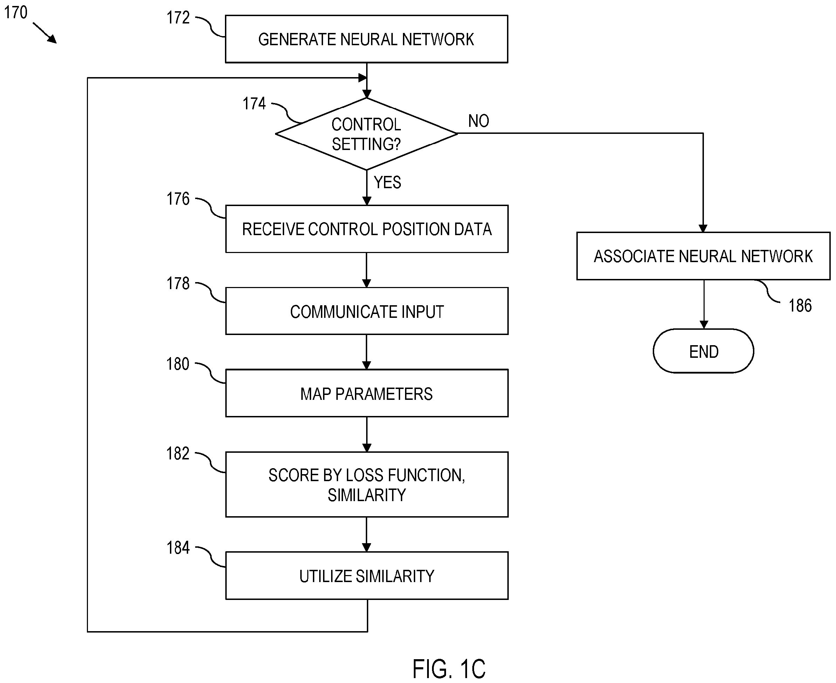

Referring to FIG. 1C, an example process 170 of creating a controllable responsive model of an audio system is provided.

The process 170 comprises generating at 172, a neural network that emulates a behavior of a reference audio system for at least two control settings of the reference audio system.

In typical applications, the neural network should be trained. In this regard, in generating the neural network, the process 170 also performs for each control setting of the reference audio system to be obtained, a set of operations (see more control settings decision box 174) that comprise:

receiving at 176, control position data designating a select control setting of the reference audio system as conditioning for the neural network;

communicating at 178, an input to the reference audio system and responsive thereto, capturing a target output of the reference audio system;

mapping at 180, parameters of the neural network such that, responsive to the input, a neural output resembles the target output of the reference audio system;

scoring by a loss function at 182, a similarity of the neural network output compared to the target output of the reference audio system; and

utilizing at 184, the similarity derived from the loss function to modify model parameters of the neural network to improve the scored similarity.

The process 170 also comprises associating at 186, the neural network with a graphical user interface that is configured to enable a user to select a virtual control setting within the graphical user interface corresponding to a select one of the at least two control settings of the reference audio system such that the neural network models the reference audio system based upon the corresponding selected control setting. For instance, the neural network may model the reference audio system at the corresponding selected control setting, or at a synthesized setting that is based, at least in part, upon the selected control setting.

In some configurations of the process 170, the reference audio system includes at least two controls, each control capable of at least two control settings. Here, generating the neural network that emulates the behavior of the reference audio system for at least two control settings can further comprise generating the neural network to emulate the behavior of the reference audio system in at least two control settings for each control of the reference audio system.

In some configurations of the process 170, generating the neural network that emulates the behavior of the reference audio system for at least two control settings, comprises sampling a control space at a discrete collection of control positions for each control of the reference audio system, and training the neural network to learn to generalize a continuum of control positions between a minimum discrete control position and a maximum discrete control position for each control.

As an additional example, in some configurations, the process 170 further comprises training the neural network using variables grouped together as tuples, each tuple including an input audio segment, a recording of the target output of the reference audio system responsive to the input audio segment, the recording used as the target for the neural output, and control values describing the control settings of the reference audio system.

In some configurations of the process 170, the reference audio system includes a control capable of at least two control settings. Here, the control comprises a select one of a potentiometer or encoder, where the least two control settings span a range of successive control values (e.g., successive can be continuous, incremental, step-wise, linear, logarithmic, antilogarithmic or other scaling), a switch having at least two switch positions, or a time varying control that changes over time at a slower rate than a range of intended frequencies at the input of the neural network.

In some configurations, the process 170 further comprises combining a random sampling procedure with an optimized sorting approach to determine the at least two control settings of the reference audio system. Here, the process 170 further comprises generating all measured control configurations ahead of time into a list, and utilizing a sorting of the list that is designed to minimize the overall distance travelled. For instance, the process 170 can optionally further comprise designating that the process starts and finishes recording with all controls at zero (or a minimum value that allows the reference audio system to produce sound), and finding the optimal path through random samples as a traveling salesman problem (TSP). Moreover, the process 170 may optionally further comprise generating nodes as a list of knob-positions-to-visit by random sampling, each knob-position-to-visit corresponding to a select node, creating a distance matrix that is formed pair-wise for the nodes, and approximating a traveling salesman solution on the distance matrix. Still further, the process 170 can optionally further comprise selecting a starting node (e.g., selecting a starting node comprises all knobs at zero or a minimal position that still allows the reference audio system to produce sound), and visiting a nearest unvisited node until all nodes are visited (e.g., visiting the nearest unvisited node by looking up the nearest unvisited node in the distance matrix).

In some configurations of the process 170, mapping parameters of the neural network such that, responsive to the input, a neural output resembles the target output of the reference audio system, comprises accepting an input audio segment (x) and a control value (c) describing the control settings of the reference audio system that is parameterized by network parameters θ (e.g., $\hat{y} = f(x, c; \theta)$). Here, scoring by the loss function, the similarity of the neural network output compared to the target output of the reference audio system, can comprise measuring a discrepancy between the neural network output compared to the target output of the reference audio system using standard supervised learning with a stochastic gradient descent to learn the network parameters θ that minimize the average loss over a corresponding training set.

In yet further example configurations, the process 170 can further comprise adjusting the reference audio system to each control setting using a robot that physically connects to controls of the reference audio system, e.g., as described more fully herein.

Traversing The Control Space

Referring to the previous FIGURES generally, in some embodiments, the control space for a given reference audio system can be continuous. However, any practical measurements are likely confined to a finite collection of control positions. Therefore, aspects herein provide a sampling strategy to collect sufficient information about the controls in a finite number of samples.

A first example approach, a "fixed grid" approach, samples each control at a number of discrete positions, where the controller process through all possible combinations in an incremental, stepwise order. By way of example, a simple two control reference audio system with 10 discretized positions per control would index incrementally from a starting point of 00, where one control is analogous to a 10s digit, and the second control is analogous to single digits (e.g., analogous to counting incrementally from 0, by increments of 1). The fixed grid approach may ultimately be too rigid in terms of number of samples. Moreover, the fixed grid approach may run a risk of overfitting to the grid points. Notably, here, "0" may mean fully counterclockwise (or clockwise). In some embodiments however, full counterclockwise may mean that a volume or gain is at zero, resulting in no output. In this scenario, "0" is a minimal setting that still produces an audible output from the reference audio system 152.

Moreover, the fixed grid approach may be problematic due to exponential scaling. For example, assume a reference audio system 152 comprises knobs that turn potentiometers, where each knob is discretized to 10 positions. A reference audio system 152 with a single knob, e.g., a volume control, can be captured by the robotic system adjusting the volume control to each of its ten positions, and at each position, capturing an output in response to a predetermined input. However, the robotic system would require 100 combinations to capture a reference audio system 152 having both a volume control knob and a gain control knob, each discretized to 10 positions.

It is not uncommon for reference audio systems to have six or more controls (e.g., gain, treble mid, bass, presence, master volume), which would result in over a million combinations on a regular grid (in general $10^n$ recordings for $n$ knobs). Furthermore, reference audio systems can have controls other than potentiometers. For instance, a switch with $m$ positions, increases the number of recordings by a factor of $m$. Some reference audio systems even include graphic equalizers with linear potentiometers, multiple channels, etc. In this example, a single reference amplifier such as a multi-channel guitar amplifier can have over 40 controls.

However, according to further aspects herein, an algorithm can break the symmetries of a regular, fixed grid and select the number of data points by applying a control space ordering scheme that deviates from a pure fixed grid approach. By way of example, an ordering scheme may comprise a random sampling strategy. In a randomized sampling strategy, control positions are chosen from a uniform distribution for each control, resulting in an unbiased sampling of the overall control space across the whole data set. The number of data points can be chosen freely. Such a process enables a balance between a sufficiently dense sampling of the control space and resource constraints, such as disk storage and recording time.

When sampling a physical device, considerations may include the density with which the control space is sampled, how the process affects the wear and tear of the involved mechanical components, and the time it takes to move the knobs between different positions.

Thus, a strategy is implemented by a control space ordering that minimizes, or at least reduces the total travel required to sample all positions while balancing the travel per component.

In an example configuration, an algorithm combines the random sampling procedure with an optimized sorting approach. In particular, all control configurations for which a measurement are desired, are generated ahead of time. Also, these control configurations are sorted. By way of illustration, sorting can be implemented to minimize the overall distance travelled, thus finding an optimal path through random samples. In an example implementation, a sorting solution is solved by implementing a traveling salesman problem (TSP), e.g., based upon an assumption that the process starts and finishes the recording with all controls at zero, to establish an optimal path through random samples.

As an example approach, an appropriate distance measure is defined between the different control configurations, i.e., different control vectors $c$. Where an overall distance travelled by each component is a consideration, an L1 distance approach can be implemented. In this example, given the desired number of examples N, an approach is to compute the matrix of control-position-wise distances $D \in \mathbb{R}^{N \times N}$ as:

$$\mathrm{D}_{[i,j]} = \left\| \mathbf{c}^{(i)} - \mathbf{c}^{(j)} \right\|_1, \ \left\{ \forall\, i, j \in \mathbb{N} \,\middle|\, i, j \in [1, N] \right\},$$

where i and j are indices of two sampled candidate vectors that contain the control positions.

Here, an acceptable approach may be to use an efficient polynomial-time approximation.

In an example configuration, a graph can be generated that graphically illustrates a pathfinding solution, given a definition that includes a known number of controls and data points. In this example, the graph can express data points as dots, Line segments between dots can be used to express the travelled path for a random order or for a sorted order using a specific solution (e.g., a traveling salesman problem solution).

Neural Models For Instrument Amplifiers

For neural network based nonlinear circuit modelling, convolutional neural networks (CNNs), and recurrent neural networks (RNNs) can be utilized. A CNN can be seen as a network of finite impulse response (FIR) filters and nonlinear activation functions. In this regard, CNNs can be considered essentially as a trainable multichannel extension of the filter-waveshaper paradigm. Here, a causal convolution layer can be written in the time domain as:

$$\mathbf{y}_t = f\left( \sum_{i=0}^{n} \mathbf{W}_i \mathbf{x}_{t-i} + \mathbf{b} \right),$$

where $\mathbf{x}_t \in \mathbb{R}^q$ is the input signal at time $t$, $\mathbf{W}_i \in \mathbb{R}^{p \times q}$ are the learned filter coefficients, $\mathbf{b} \in \mathbb{R}^p$ is a learned bias term, and f $(\cdot)$ is a nonlinear function applied elementwise.

In the case of amplifier modeling (modeling a reference audio system herein), an underlying causality of the device-under-test, as well as algorithmic latency concerns for the model itself, direct the use of causal convolutions.

As extended feedforward FIR filter systems, RNNs can be seen as the neural counterpart to feedback IIR filter systems. Furthermore, RNNs can be interpreted as the discretization of a system of nonlinear ordinary differential equations (ODEs). In this regard, ODEs are commonly used to represent the behavior of nonlinear electric circuits. Given an excitation signal $x_t$ (e.g., clean guitar) and a model state $h_{t-1}$, an RNN updates its state to $h_t$ and derives an output variable $y_t$ (e.g., amplifier response to input) from the state:

$$\mathbf{h}_t = f(\mathbf{x}_t, \mathbf{h}_{t-1}), \ \mathbf{y}_t = g(\mathbf{h}_t).$$

The amplifier controls can be included as an additional input vector $c_t$ to the neural network, allowing a single model to represent different user control configurations.

Loss Functions

As used herein, a loss function (e.g., loss function 158, FIG. 1B) measures the difference between a model prediction and a target signal while its derivative provides gradients to be used during training in order to adjust the model parameters in order to improve the model's accuracy.

$$L_{\mathrm{MSE}}(\hat{\mathbf{y}}, \mathbf{y}) = \frac{1}{BT} \sum_{i=1}^{B} \sum_{t=1}^{T} ||\mathbf{y}_t^{(i)} - f(\mathbf{x}_t^{(i)}, \mathbf{c}^{(i)})||_2^2$$

where T is the number of time steps in a training example frame (indexed by $t$), and $B$ is the number of elements in a minibatch (indexed by $i$). This loss function corresponds to minimizing the energy of the model's error.

$$\mathbf{e}_t^{(i)} = \mathbf{y}_t^{(i)} - f\left(\mathbf{x}_t^{(i)}, \mathbf{c}^{(i)}\right).$$

An extension to MSE is to normalize the loss function by the minibatch target signal energy, which leads to the error-to-signal ratio (ESR) loss.

$$L_{\mathrm{ESR}}(\hat{\mathbf{y}}, \mathbf{y}) = \frac{\sum_{i=1}^{B} \sum_{t=1}^{T} ||\mathbf{e}_t^{(i)}||_2^2}{\sum_{i=1}^{B} \sum_{t=1}^{T} ||\mathbf{y}_t^{(i)}||_2^2}.$$

According to certain aspects herein, a process incorporates the conditioning variables to the model, normalizes the conditioning variables to the range [0, 1], and concatenates the conditioning variables as additional input channels to an LSTM network. In an example embodiment, a single layer LSTM with 32 cells (denoted LSTM-32) provides a good balance between perceptual quality and real-time cost. Training of the LSTM-32 model can be carried out, by way of non-limiting example, for 1 million (1M) iterations using the ESR loss and the Adam optimizer.

Robotic/Mechatronic Systems

As noted more fully herein, aspects of the present disclosure provide robotic systems that automatically change settings on an audio system. In this regard, the robotic system is programmed to adjust the audio system across a predetermined range of settings.

Here, the "range of settings" can be all settings across all controls, all settings across a subset of controls, a subset of settings across each of the controls, a subset of settings across a subset of controls, a combination of an entire range of settings or subset of settings per control across all or a subset of controls, etc.

Thus, by way of non-limiting illustration, a potentiometer may be adjustable from a range of 0-10, but the desired range of settings may indicate that only the range of 1-5 is of interest. As another example, a switch may select different gain ranges at different switch positions, but only a subset of those switch positions may be of interest, etc.

In an example implementation the robotic system herein includes a device interface coupled to a control sequencer. The device interface adapts to one or more controls of the audio system that are to be changed. The control sequencer provides a control sequence to the device interface where each step in the sequence provides control value(s) that cause the device interface to vary the settings associated with the audio system. By way of example, in some embodiments, a control sequence defines for each iteration/step, a corresponding setting for each control to be adjusted. In other embodiments, a control sequence is provided for each control (e.g., volume, bass, treble, drive, etc.), to be adjusted. In this regard, each control sequence has a unique/particular set of sequence values for each iteration/step of that control sequence that accounts for the range of valid setting values for the associated control. The sequence values correspond to valid predetermined control settings for that control of the audio system.

In some embodiments, the robotic system can also include a signal generator that provides an input signal to the audio system and a receiver that receives an output signal from the audio system. The output signal represents the response of the audio system to the input signal at the current control settings. Thus, by applying an input signal that varies across a range of expected inputs to the audio system (e.g., sweeps across variations in amplitude and frequency) at the input, the receiver of the robotic system measures a response of the audio system via the output at each setting. Moreover, by stepping through the control sequence iteratively and by collecting a response of the audio system at each iteration, a responsive behavior of the audio system can be collected that reflects different settings of the audio system.

In practical applications, a combination of sequence values of the control sequence(s) can represent a sufficiently high number of samples to determine a responsive behavior of the audio system, at least across the range of settings of the audio system that are characterized by the control sequence. The number of samples (steps or iterations of the control sequence) required to be "sufficiently high" will depend upon the desired accuracy. By way of example, a "sufficiently high" number of sequence iterations can depend upon factors such as the number of controls, number of settings per control, desired accuracy of the responsive behavior to precisely match the audio system, etc.

In an example implementation, the combination of sequence values of the control sequence(s) is/are generated by a sufficiently dense random sampling process. In other words, rather than recursively measuring every possible combination of settings, the disclosed embodiments generate a sufficiently large number of samples of settings, instead of all the possible combinations of samples, thereby reducing the time that is involved in determining the responsive behaviors of audio systems. For some embodiments, the samples are generated/sorted to reduce wear on the audio systems. Because of the randomization of the sequence values, system-related artifacts, or process-related artifacts (e.g., time-dependent drift, circuit-temperature-dependent drift, etc.) are also reduced. Furthermore, because a sufficiently high number of samples are collected, the responsive behavior of the audio system is determinable through statistical processes.

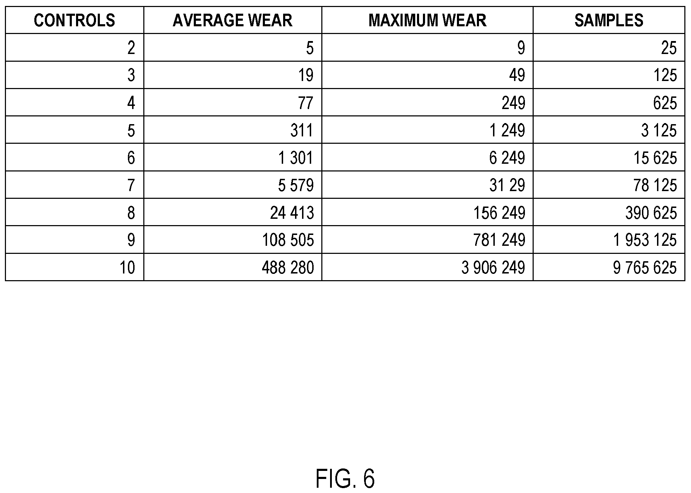

For clarity, in some embodiments, a sufficiently high number of samples can be characterized herein as a number that is high enough to permit reliable statistical analysis. Thus, although the number might vary depending on context, sample size is determined as a function of the desired analytical context. Similarly, in this example embodiment, a sufficiently dense random sampling means having enough different sampling points to permit reliable statistical analysis. Again, the density will vary based on context. However, those having ordinary skill in the art are fully enabled and capable of determining correct sample size and understanding how to calculate a sufficiently high number of samples for purposes of a sufficiently dense random sampling. Consequently, although only a truncated discussion is provided herein of what is a sufficiently high number of samples or a sufficiently dense random sampling, specific numerical examples are provided with reference to FIGS. 6 through 11 to illustrate the advantages of sufficiently dense random sampling.

In other sample embodiments, the "a sufficiently high number of samples" can designate a control space that captures at least one control in at least two states, thus resulting in a model that is more complex than a model at a single snapshot of settings.

As a robotic system, in some embodiments, the device interface comprises motor controllers that control motors. The motor controllers receive the sequence values from the control sequencer. Each sequence value is received iteratively and is converted to corresponding motor settings. In this regard, a "motor" can mean a motor, linear actuator, or other device capable of causing motion (including movement along one mor more axes) to cause an associated control associated with the audio system to change to a desired setting. Thus, changes can be affected rotationally, along a defined axis, in multiple axes (X, Y, Z), combinations thereof, etc. Here, the audio system, environment, nature of the behavior of the audio system to be evaluated, and other factors can determine the specific configuration.

The robotic system further comprises control couplers that couple the motors to the controls, thereby allowing the motors to change control settings. Here, the precise configuration of the control coupler can vary depending upon the type of control of the audio system to be controlled. For instance, a control coupler intended to adjust a potentiometer, encoder, or rotary switch can mechanically attach to a shaft of the controller (e.g., to a shaft of the potentiometer, encoder, rotary switch, etc.). Here, the size/shape of the shaft, whether there is a knob or if the knob can be removed, the positioning of the shaft on the audio system relative to the positioning of the corresponding motor etc., will dictate the specific configuration of a given control coupler. Alternatively, a control coupler to flip or push a switch will attach to an actuator/toggle of the switch, etc., and will thus require a corresponding configuration. A control coupler to control a microphone used to collect a response of the audio system can be mounted to a sled or other configuration that provides controlled movement along at least one axis. Here, a microphone stand or other mount can connect to the control coupler to control the positioning of the microphone.

The response of the audio system to the input signal at the various control settings can be used to train machine-learning algorithms (such as neural networks) to emulate the behavior of many different types of audio systems. For such a machine-learning emulation system, the response of the audio system serves as the ground-truth for the machine-learning emulation system. By way of non-limiting example, the response of the audio system can be used in conjunction with a neural network model as described in U.S. Patent Application serial no. 16/738512, having the title "Neural Modeler of Audio Systems", filed June 25, 2020, which is incorporated by reference in its entirety.

Having provided a broad technical solution to a technical problem, reference is now made in detail to the description of the embodiments as illustrated in the drawings. While several embodiments are described in connection with these drawings, there is no intent to limit the disclosure to the embodiment or embodiments disclosed herein. On the contrary, the intent is to cover all alternatives, modifications, and equivalents.

Examples

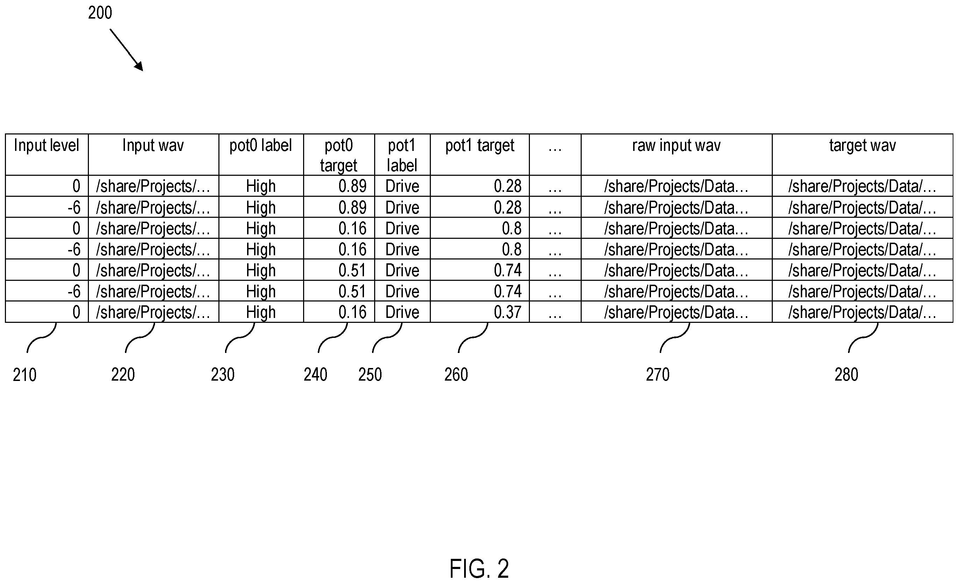

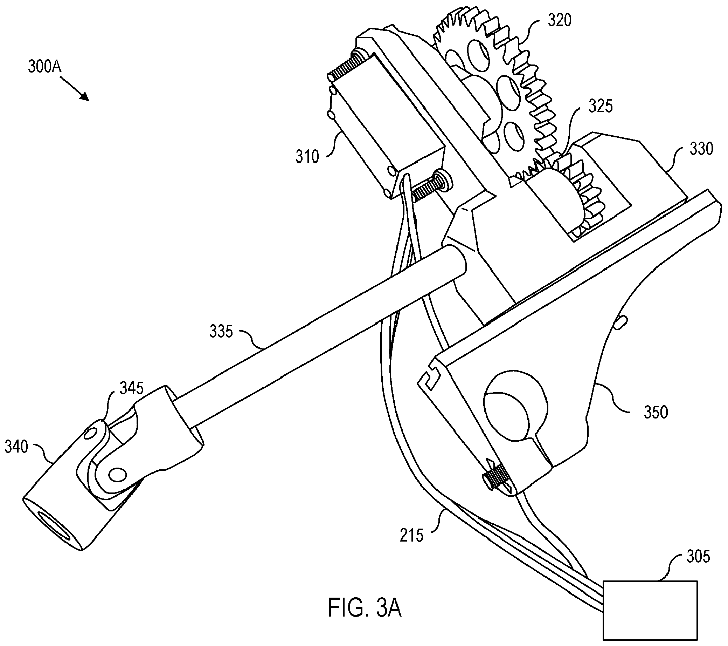

Turning to FIG. 2, disclosed is a chart showing an embodiment of control sequences 200 that are provided by a control sequencer in a robotic system for determining responsive behaviors of audio systems. The chart shown in FIG. 2 is an example but can be utilized with any of the embodiments described herein and can be particularly utilized with any of the structures shown and described with reference to FIG. 3A-FIG. 12.

For some embodiments, the control sequences 200 are provided in data format as entries in a spreadsheet, such as a .csv file or other known database formats. Included in the control sequences 200 are input levels 210, input wave file 220 (which has a digital representation of the input signal), first control labels 230, first control target values 240, second control labels 250, second control target values 260, raw input wave data 270, and target wave data 280. Of course, it should be appreciated that, depending on the number of controls that are being adjusted, the control sequences 200 can be extended to accommodate third controls, fourth controls, etc.

Each row of the example control sequence of FIG. 2 may be considered a step in the control sequence. Similarly, a column (e.g., control target values 240, 260) may be considered a control sequence for a specific control (e.g., a potentiometer) of an audio system. In this regard, example values in the control sequences 200 correspond to valid predetermined control settings for their respective example controls, and thus the values in the illustrated FIGURE are presented only by way of illustration and not by way of limitation. Further, the control sequences may be located in one file or spread over more than one file. For example, a first control sequence for first and second controls of a system may be in a first file, while a second control sequence for third and fourth controls of the system are in a second file. As another example, a first file may include just the input levels and the input wave file locations, a second file has a first control sequence for a first control of a system, and a third file has a second control sequence for a second control of the system. When the control sequence is broken up into several files, then a control sequencer (see FIG. 12) reads each file for a specific step in the sequence to create that step in the sequence. In some embodiments, a same input wave file may be used for each step in the sequence, and in such embodiments, an indication for the input wave file for each step is not needed in the overall control sequence.

Thus, for example, if the controls are potentiometers on an audio system, then the potentiometer positions for each potentiometer are generated from the values of their respective control sequences 200. Specifically, if one potentiometer is a high (treble) control (e.g., denoted as first control 230) and another potentiometer is a drive control potentiometer (e.g., denoted as second control 250), then the control target values 240, 260 determine the potentiometer positions for treble and drive, respectively. Although a treble control sequence with target control values 240 and a drive control sequence with target control values 260 are used as illustrative examples, it should be appreciated that the control sequence 200 may include a volume control sequence with volume control values; a gain control sequence with gain control values; a treble control sequence with treble control values; a bass control sequence with bass control values; a tone control sequence with tone control values; an equalizer control sequence with equalizer control values; a reverb control sequence with reverb control values; a contour control sequence with contour control values; a presence control sequence with presence control values; etc. That is, the control sequence is any control sequence that is suitable for an associated audio system.

Continuing with the embodiment of FIG. 2, in some embodiments, such as for potentiometers, control positions can be expressed as floating-point values between 0 and 1, thereby allowing for appropriate scaling to accommodate different systems. For example, controls in some systems may have a total turn angle of 300 degrees, while other systems may have a total turn angle of 180 degrees, etc. Consequently, 0 represents the lowest value for a control while 1 represents the highest value for the control for any given system. It should be appreciated that the control, for other embodiments, may be toggle switches (with switch positions) or sliders (with slide positions), depending on the manufacturer and their design specifications. Of course, multi-way switches, concentric potentiometers, push-pull potentiometers, rotary encoders, foot switches, touch displays, electronic inputs, positioning systems (e.g., for a microphone) and other mechanisms are also contemplated in this disclosure.

Ultimately, the control sequences 200 have a combination of sequence values that represents a sufficiently high number of samples that are used to determine a responsive behavior of the audio system. Also, the combination of sequence values from all control sequences can be generated by a sufficiently dense random sampling of control points. Preferably, the control sequences 200 provide a minimally acceptable and sufficiently high number of samples for the changing of each control setting to reduce mechanical wear of the controls. In other words, rather than recursively measuring every possible combination of settings, the disclosed embodiments sample only a subset of all the combinations, thereby reducing the time that is required to obtain a sufficient number of samples.

For instance, in some embodiments, the combination sequence values for each control represent sample values from a random distribution. Here, the sample values can be sorted to reduce or minimize wear of the controls of the audio system. As another example, the combinations of values can represent Markov chain Monte Carlo (MCMC) sampling values for a sufficiently dense random sampling of control settings. Insofar as those having skill in the art understand how to implement MCMC (or other probabilistic) sampling, further discussion of MCMC is omitted herein.

In operation, a device interface can include a control device that reads control position information from the control sequences 200. The control position information is optionally processed and is conveyed to corresponding motor controllers (described in greater detail below). The motor controllers control associated motors that couple to associated amplifier controls via corresponding control couplers to set the controls associated with the audio system to control values corresponding to the read control positions.

Because of the randomization of the sequence values, effects from system-related artifacts or process-related artifacts (such as drift) are reduced. Furthermore, because a sufficiently high number of samples are collected, the responsive behavior of the audio system is determinable through statistical processes. After setting the amplifier control value according to the read value (e.g., after all the motors have stopped), a signal generator (also described in greater detail below) provides an input signal to the audio system. A receiver (described below) receives an output signal from the audio system, with the output signal representing a response of the audio system to the input signal at the control settings. The response is recorded and stored. In some embodiments, each step in a sequence can specify audio file(s) to be used for recording. As such, the input signal at each step of a sequence can be the same or different. In embodiments where a sequence does not specify an audio file, the same audio file will be used for each step in the sequence.

The system repeats this process until all the values in the control sequences 200 have been applied and their respective responses have been recorded. In this regard, the process can be started, stopped, restarted, etc. Moreover, where an audio system is implemented in two or more identical instances, it may be possible to divide the control sequence file into two or more files, each run on an associated instance of the audio system. The results from the collection of iterations can then be assembled into an indication of the responsive behavior of the audio system.

When all the responses have been collected and stored, then the collected responses can be used to determine the responsive behavior of the audio system. Alternatively, the collected responses can be used to train neural network-based models to emulate the responsive behavior of the audio system, to understand and distinguish the behavior of one type of amplifier (or system) from another type of amplifier (or system), to distinguish one manufacturer from another, or to determine characteristic differences on a multitude of other variables. Such a model can learn to emulate the responsive behavior of the audio system at any given control setting, within the control space that is defined by the automated recording process.

Turning now to FIG. 3A, an embodiment of mechanical components in a robotic system 300A are illustrated. The illustrated mechanical components can be integrated into an implementation of the device interface and can be utilized for determining responsive behaviors of audio systems, as noted more fully herein. Moreover, the illustrated mechanical components shown in FIG. 3A can be utilized with any of the embodiments described herein and can be particularly utilized with any of the structures, processes, etc., shown and described with reference to the other FIGURES herein. Moreover, although illustrated as a single instance, the structures of FIG. 3A can be scaled to accommodate audio systems of various complexities.

The robotic system 300A comprises a control device 305, such as, for example, a Raspberry Pi® system, computer, dedicated microcontroller, or other type of programmable processor. For the embodiment of FIG. 3A, the control device 305 can circuitry to implement the sequence controller, motor controllers, and other control/processing as described more fully herein.

For instance, the control device 305 can include motor controller(s), e.g., that are implemented using discrete logic circuits (e.g., application-specific integrated circuit (ASIC) having appropriate combinational logic gates, programmable gate array (PGAs), field-programmable gate arrays (FPGAs), etc.). By way of example, if the control device 305 is a Raspberry Pi® system, then a 16-channel pulse-width modulated (PWM) servo bonnet for Raspberry Pi® from Adafruit Industries LLC in conjunction with available Python® libraries can be used to program the motor controller(s). As another example, for a stepper motor, the motor controller can be a low-voltage stepper motor driver, such as the DRV8834 module from Texas Instruments, Inc.

As illustrated, a motor controller within the control device 305 is communicatively coupled to a motor 310. Insofar as communication (wired or wireless) between the control device 305 and the motor 310 are known in the art, further discussion of the interface is omitted herein.

Each motor controller receives its respective sequence values iteratively from the control sequencer (also implemented using appropriate logic circuits). Upon receiving the sequence value, each motor controller converts the sequence value to a corresponding motor setting, with each motor setting corresponding to its respective control setting. It should be appreciated that the control device 305, for some embodiments, can also include a signal generator and/or receiver, and thus also records and/or stores the response from the audio system using, for example, a universal serial bus (USB) audio interface between an audio system (not shown) and the control device 305.

In the illustrated robotic system 300A, the motor 310 is operatively coupled to its corresponding motor controller (in the control device 305) through, for example, an electrical connection 315 (e.g., wiring). For some embodiments, the motor 310 can be controlled by the control device 305 through wireless communication protocols. Ultimately, the control of the motor 310 is determined by the values from the control sequences 200 (FIG. 2).

Continuing, the motor 310 is mechanically coupled to a set of gears 320, 325, which are controlled and turned by the motor 310. The motor 310 and the gears 320, 325 are mechanically coupled together through a housing 330 that affixes the gears 320, 325 in relation to the motor 310. It should be appreciated that the gear ratio can be adjusted to increase or decrease the number of turns that are required by the motor 310 to appropriately change the control settings. By way of example, when using the Adafruit apparatus, the turning range is approximately one-hundred-and-twenty degrees (~120°). Thus, to extend the rotational range to -270°, a gear ratio of approximately 9:4 should be applied. As another example, when using HS-422 servo motor (by Hitec), which has ~180° turning angle, a gear ratio of approximately 15:9 should be applied to ultimately obtain a -300° range of motion at the control. As one can appreciate, depending on the final rotational range, the gear ratios can be altered in direct mathematical proportions.

For some embodiments, the motor 310 is a servo motor, while for other embodiments, the motor 310 is a stepper motor. It should be appreciated that the type of motor 310 is largely dependent on the design, given the limitations of each choice, and may comprise in practice, a motor, linear actuator, or other device capable of motive response. Servo motors can cover a continuous range of angles, although they are typically limited by the maximum angle (e.g., less than 180 degrees), which in turn necessitates utilization of gears. In contrast, stepper motors have no such angle limitations. Although stepper motors have a discrete number of steps per resolution (e.g., 360 degrees), the accuracy of stepper motors is sufficient for most (if not all) practical settings, insofar as those settings are typically adjusted by the human hand. Some servo motors have a fourth wire that allows for feedback control of the motor position, which permits the user to quantify the error of the control positioning. Other types of motors can also have or be used in conjunction with analog-to-digital converters (ADC) that allow for feedback reading by the control device 305.

A mechanical rod 335 (or other connector) is affixed to the final gear 325, and a control coupler 340 is mechanically affixed to the rod 335. As such, the control coupler 340 becomes mechanically coupled to its corresponding motor 310 through the rod 235 and the gears 320, 325. In operation, the control coupler 340 is mechanically coupled (or is otherwise adapted to be coupled) to a corresponding control of an audio system (not shown in FIG. 3A but described in detail below). This allows the control coupler to mechanically change a corresponding control setting in direct relation to (and in response to) its corresponding motor setting. The changing of each control setting affects the response of the audio system.

In the embodiment of FIG. 3A, the control coupler 340 is mechanically coupled (or is otherwise adapted to be coupled) to the rod 335 with a universal joint 345. The universal joint 345 permits compensation for misalignment and, sometimes, for greater tolerances when different audio systems have slightly different control spacings.

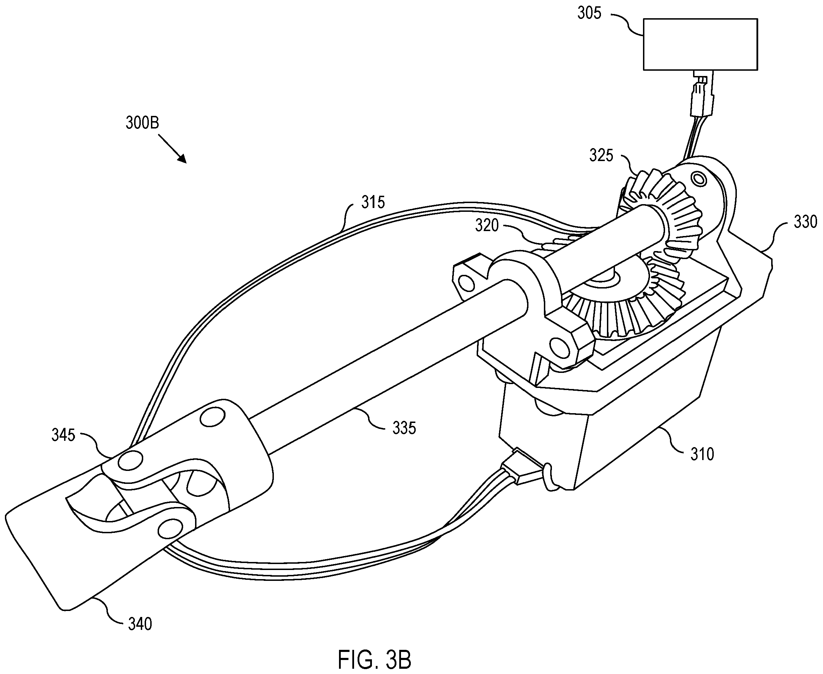

Referring now to FIG. 3B, a diagram shows another embodiment of mechanical components in a robotic system 300B for determining responsive behaviors of audio systems. The illustrated mechanical components shown in FIG. 3B can be utilized with any of the embodiments described herein and can be particularly utilized with any of the structures, processes, etc., shown and described with reference to the other FIGURES.

Unlike the system 300A of FIG. 3A, which shows parallel-axes gears 320, 325, the robotic system 300B of FIG. 3B shows intersecting-axes gears 320, 325, specifically bevel gears 320, 325. The use of bevel gears 320, 325 provides a more compact design and some degree of space saving (compared to the parallel axes gears 220, 225).

Similar to FIG. 2, the robotic system 300 of FIG. 3 comprises a control device 305 coupled to a motor 310 via an electrical connection 315 (e.g., wiring). In this regard, the control device 305 can be implemented analogous to the control device 300A of FIG. 3A. Likewise, the motor 310 can be implemented to the motor 310 of FIG. 3A.

A housing 330 is provided for affixing the gears 320, 325 in relation to the motor 310. Moreover, a mechanical rod 335 mechanically couples to the gear 325 such that rotation of the gear 325 causes corresponding rotation of the mechanical rod 335. A control coupler 340 extends from the end of the mechanical rod 335 via a universal joint 345, analogous to like structures described with reference to FIG. 3A. Insofar as analogous components to the control device 305, the motor 310, the connection 315, the housing 330, the mechanical rod 335, the control coupler 340, and the universal joint 345 are described in detail with reference to FIG. 3A, the illustrated components are not discussed further with reference to FIG. 3.

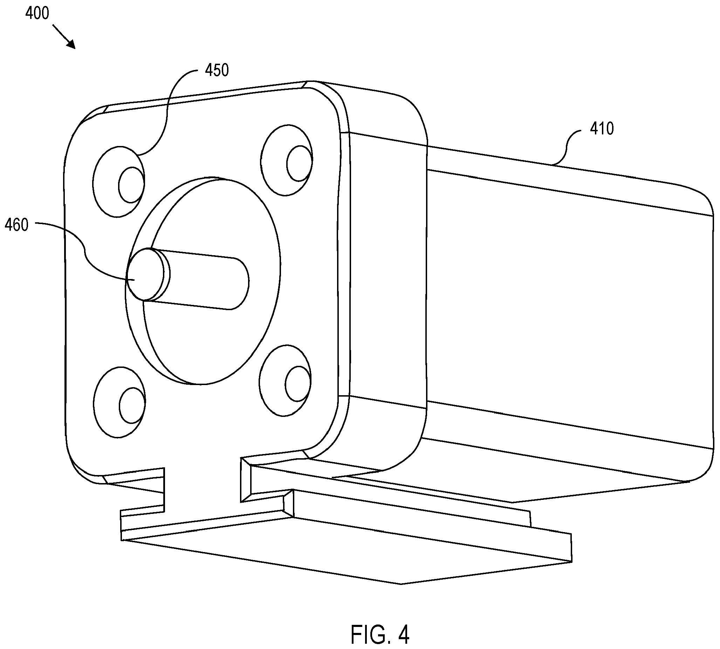

Turning now to FIG. 4, an enlarged view of an embodiment of a motor 410 is illustrated. The illustrated motor shown in FIG. 4 can be utilized with any of the embodiments described herein and can be particularly utilized with any of the structures, processes, etc., shown and described with reference to the other FIGURES herein. For instance, the motor 410 can be used as the motor 310 of FIG. 3A or the motor 310 of FIG. 3B.

As illustrated, a perspective view of the motor 410 is shown from the direction of attachment points 450 and axle 460. The axle 460 can mechanically couple to one of the gears 320 (FIG. 3A, FIG. 3B, respectively), while the attachment points 450 are used to secure the motor 410 to its appropriate position in the housing 330 (FIG. 3A, FIG. 3B, respectively).

In alternative embodiments, using a stepper motor 410 such as a National Electrical Manufacturers Association (NEMA)-8 stepper motor) allows for more precise control and, concurrently, dispenses with the need for gears (as the stepper motor can rotate to any desirable angle). In some embodiments, the stepper motor 410 has two hundred (200) steps per revolution with micro-stepping (which can be increased as desired). The stepper motor 410 also permits direct control of the motor setting from the control sequencer.

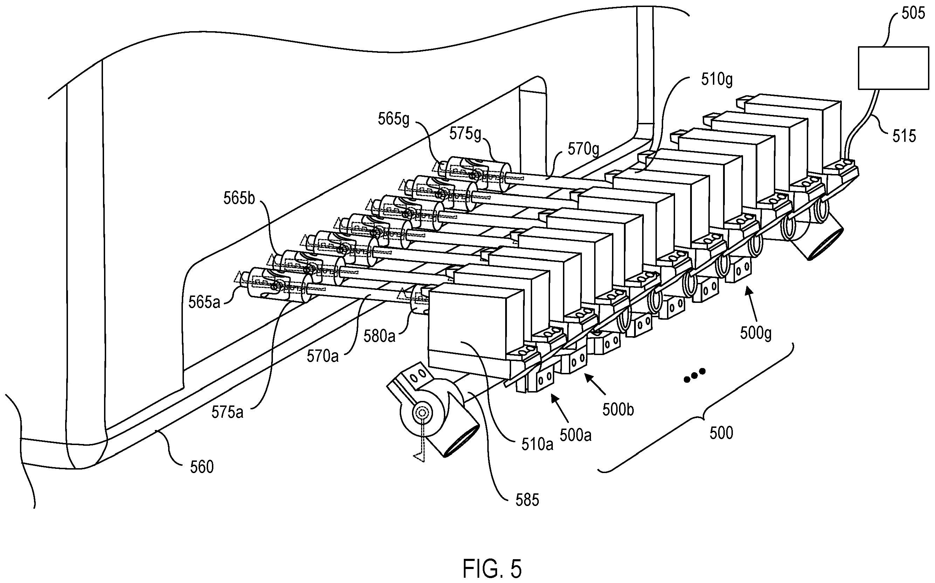

With the systems in FIG. 1A through FIG. 4 in mind, attention is turned to FIG. 5, which shows a robotic system connected to an audio system 560. The illustrated components shown in FIG. 5 can be utilized with or otherwise analogous to any of the embodiments described herein and can be particularly utilized with any of the structures, processes, etc., shown and described with reference to FIG. 1A-FIG. 4, and FIG. 6-FIG. 12.

As illustrated, the robotic system includes a set of robotic arm assemblies. In this instance, not every robotic arm assembly of the robotic system is utilized. Rather, since the example audio system 560 includes seven potentiometers, only seven robotic arm assemblies 500a-500g (collectively 500) are utilized.

Moreover, a control device 505 couples to motors 510a-510g (collectively 510) of the robotic arm assemblies 500a-500g via suitable wiring 515. In this regard, the control device 505 is analogous to the control device 305 (FIG. 3A) and/or control device 305 (FIG. 3B) except that the control device 505 is expanded to independently control all seven (in this example) robotic arm assembles 500a-500g. In this example implementation, the control device 505 processes one or more control sequences (e.g., see control sequence 200, FIG. 2), except that the control sequence(s) are expanded to define settings for all seven controls of the audio system 560. In this regard, depending upon the implementation, the control sequences can be dynamically generated by the control device 505, e.g., at run time. In other example implementations, the control sequence is generated in advance of operation. For instance, control sequences can be generated by the control device 505 in advance, or the control sequences can be generated by a remote processing device, and then loaded into the control device 505.

In this regard, the motors 510a-510g (collectively 510) of the robotic arm assemblies 500a-500g can be implemented in a manner analogous to any of the motor structures described more fully herein, including those embodiments of FIG. 3A-FIG. 4. In this regard, gears and other suitable mechanical coupling/linking structures may also be provided (not explicitly shown in FIG. 5), e.g., depending upon the motor configuration.

As shown in FIG. 5, the audio system 560 (e.g., illustrated as a guitar amplifier) comprises multiple controls 565a-565g (collectively, 565), with each control 565 corresponding to one of the robotic arm assemblies 500a-500g, respectively. The robotic arm assemblies 500a-500g are mechanically coupled to their respective controls 565 through mechanical rods 570a ... 570g (collectively, 570) with connectors 575a... 575g (collectively 575 - with or without universal joints) in a manner similar to analogous components in FIG. 3A and FIG. 3B.

Moreover, in some embodiments, an additional connector 580a-580g can be connected at a base of each mechanical rod 570a-570g. Each additional connector 580a-580g can have a universal joint to facilitate greater variance and flexibility in adapting the system to various audio systems.

Also as illustrated, the robotic arm assemblies 500a-500g are positioned relative to each other using a frame 585. Thus, as one can appreciate, for different types of audio systems (with different configurations), a different (but appropriate) frame 585 can be used to align the robotic arm assemblies 500a-500g to their respective controls 565a-565g. In some embodiments, an adjustable frame 585 and/or an adjustable interface on the frame 585 (such as universal joints) can be used so that a single frame can accommodate multiple audio system configurations. For instance, using set screws or other fastening means, in some embodiments, it may be possible to reposition each robotic arm assemble 500a-500g along the length of the frame 585.

The mechanical coupling of the robotic arm assemblies 500a-500g to their respective controls 565a-565g allows control over the settings of the audio system in accordance with control sequences, as explained with reference to FIG. 1A, FIG. 1B. For example, if the controls 565a-565g include a volume controller, a gain controller, a treble controller, a bass controller, a tone controller, a reverb controller, a contour controller, a presence controller, or any other type of control, then each of those controllers 565 can be set according to their respective control sequences.

In some embodiments, at each setting, a signal generator (not expressly illustrated in FIG. 5) provides an input signal to the audio system 560 and, thereafter, a receiver (not expressly illustrated in FIG. 5) receives an output signal from the audio system 560, with the output representing the response of the audio system 560 to the input signal at the control 565 settings.

As shown in FIG. 1A through FIG. 5, aspects of the present disclosure teach systems and processes for determining responsive behaviors of audio systems without using every setting on the audio system. For instance, disclosed embodiments of the robotic systems teach a control sequencer that provides control sequences. In some embodiments, the control sequence(s) use combinations of sequence values that represent a sufficiently high number of samples to adequately generate a responsive behavior that reflects the actual audio system, even across a full range of control settings in some instances.

Because the combinations of sequence values do not recursively measure every possible combination but, instead, sample only a subset of all the combinations, the disclosed embodiments reduce the time and the wear associated with determining responsive behaviors of audio systems. Also, because of the randomization of the sequence values, system-related artifacts or process-related artifacts are reduced. Furthermore, because a sufficiently high number of samples are collected, the responsive behavior of the audio system is determinable through known statistical processes.

To illustrate the benefits associated with sufficiently dense random sampling, attention is turned to FIGS. 6 through 10. Initially, it should be observed that a sufficiently dense sample should also consider total allowable mechanical wear that is determinable from, for example, datasheets for the hardware (e.g., potentiometers or other hardware controllers). Thus, for example, a particular potentiometer might have a nominal life expectancy of between one million (1,000,000) and two million (2,000,000) cycles (fully clockwise and fully counterclockwise). Given that the process of taking measurements for the audio system should not induce a significant amount of mechanical wear, for this example, one percent (1%) of the nominal life expectancy would correspond to between ten thousand (10,000) and twenty thousand (20,000) cycles. In the present disclosure, the mechanical wear is reported in a unidirectional manner, so that one (1) cycle is defined as a full rotation, either full clockwise or full counterclockwise. Thus, mechanical wear of 1% of the nominal life expectancy would permit approximately forty thousand (40,000) full turns. Thus, for this example, a sufficiently dense random sample would have a sample size that is less than 40,000.

One more consideration relates to the data itself. By way of example, for twenty thousand (20,000) samples of input-and-output audio pairs, if each sample is forty-eight (48) kilohertz (kHz) at sixteen (16) bits of resolution, the input-and-output data alone would occupy approximately 17.8 gigabytes (GB) of data.

With these example numbers from this example as context, attention is turned to FIG. 6, which shows example numerical values that represent mechanical wear for different numbers of controls when regular grid sampling is employed for five (5) equally spaced control values. For example, for two controls with five control values each (shown in the first row of table in FIG. 6), the total number of samples would be 25, with a maximum wear of 9 and an average calculated wear of 5. As one can see from FIG. 6, a linear increase in the number of controls results in an exponential increase in the number of samples, the maximum wear, and the average wear. By the time that ten (10) controls are considered, there are nearly ten million samples (specifically, 9,765,625 samples) that result in maximum wear and average wear of 3,906,249 and 488,280, respectively.

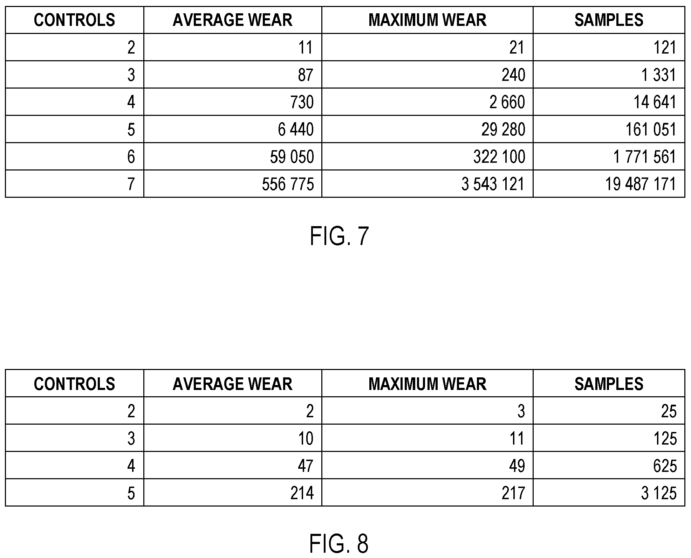

Extending the number of possible settings from five (5) values to eleven (11) values results in even greater wear to the hardware. As shown in FIG. 7, a 2-control-11-settings configuration results in 121 samples with the wear being more-than-double the wear shown for the 2-control-5-setting configuration of FIG. 6. A 7-control-1 1-settings configuration (in FIG. 7) has approximately twice the number of samples as a 10-control-5-settings configuration (in FIG. 6), with the maximum wear and average wear in FIG. 7 eclipsing the corresponding values in FIG. 6. As one can readily observe, the number of samples becomes impractically high, even exceeding the total life cycle of some hardware components, as either the number of controls or the number of settings increases.

By comparison, numerical examples for sufficiently dense random sampling are shown in FIG. 8. Specifically, FIG. 8 shows a table for various 5-settings controllers. Unlike FIG. 6, the 2-control-5-settings configuration results in a maximum wear of 3 (as compared to 9 in FIG. 6) and an average wear of 2 (as compared to 5 in FIG. 6). Likewise, a comparison of the 5-control-5-settings configuration shows that the sufficiently dense sorted random sampling (in FIG. 8) provides a remarkable reduction in maximum and average wear compared to the regular grid sampling (in FIG. 6). In other words, the sufficiently dense sorted random sampling results in less mechanical wear, while concurrently allowing for substantially even distribution of sample values.

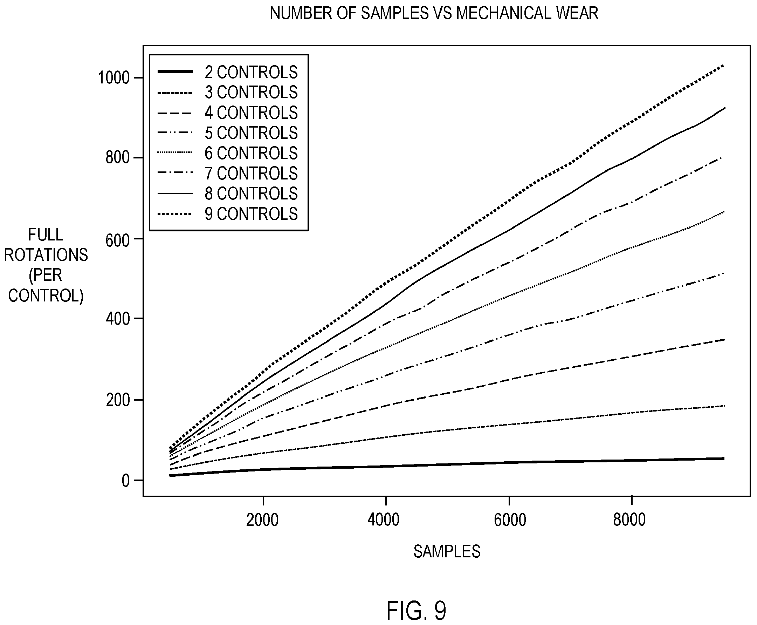

FIG. 9 is a graph that visually illustrates mechanical wear as a function of the number of samples for different numbers of controls. As shown in FIG. 9, the mechanical wear relates linearly (rather than exponentially) to the number of samples in the sufficiently dense sorted random sampling. Thus, unlike the regular grid sampling, wear on hardware components is reduced considerably, even as much as several orders of magnitude.

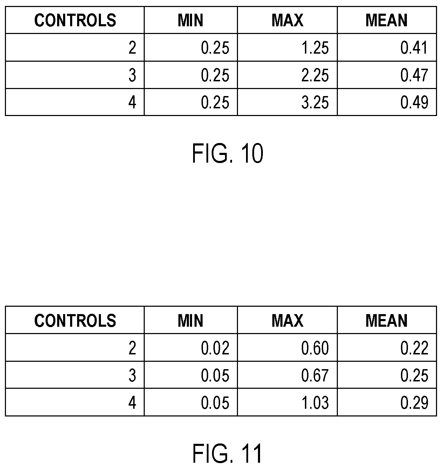

An additional benefit of sufficiently dense sorted random sampling includes an ability to cover a dense sampling space with few (if any) duplicative values. Furthermore, the random sorted sampling permits better interpolation and shorter travel between consecutive settings. Comparisons of the regular grid sampling and sufficiently dense sorted random sampling are shown in FIGS. 10 and 11. Specifically, FIG. 10 shows numerical examples of average travel across all pairs of consecutive values for a regular grid sampling with five (5) equally spaced control values, while FIG. 11 shows corresponding values for a sufficiently dense random sampling. As shown in FIGS. 10 and 11, the maximum travel distance, the minimum travel distance, and the average travel distances are much better for the random sorted sampling than the regular (exhaustive) grid sampling.

It should also be noted that, because of such a large reduction in the sampling size, the random sorted sampling also provides the additional benefit of savings in both time and data storage. As noted more fully herein, in some embodiments, the combination sequence values for each control represent sample values from a random distribution. Here, the sample values are sorted to reduce or minimize wear of the controls of the audio system.

Referring to FIG. 12, a block diagram illustrates an example system robotic system that can reduce, time, wear, and data-storage requirements associated with determining responsive behaviors of audio systems. The illustrated block diagram shown in FIG. 12 can be utilized with any of the embodiments described herein and can be particularly utilized with any of the structures, processes, etc., shown and described with reference to FIG. 1A through FIG. 11.

Notably, the systems and processes as discussed with reference to FIGS. 1A through 11 can be broadly depicted in a robotic system 1200, such as in an embodiment that is shown in FIG. 12. Generally speaking, the system 1200 comprises a control device 1205 that is operatively coupled to a control sequencer 1210, motor controller(s) 1215, a signal generator 1220, and a receiver 1225. The motor controller(s) 1215 are operatively coupled to motors 1230, which are in turn mechanically coupled to controls 1260 associated with an audio system 1265. The signal generator 1220 is operatively coupled to an input 1270 of the audio system 1265 and the receiver 1225 is operatively coupled to an output 1275 of the audio system 1265.

Notably, the blocks illustrated in FIG. 12 need not correspond verbatim identically to structure shown in preceding FIGURES. For instance, FIG. 12 shows a control device 1205 in a separate box to show how a supervisory processor can control the various components, including the signal generator 1220, control sequencer 1210, motor controllers 1215 and receiver 12225. However, in practice, any combination of these functions can be implemented in one or more devices, including a single device as illustrated by the control device 205 of FIG. 2 and/or the control device 305 of FIG. 3A, 3B. Moreover, the device interface described broadly herein, can be implemented by the hardware that couples the control sequencer values to the audio system, e.g., the motor controllers 1215, motors 1230 and any additional structures (e.g., universal joints, mechanical arms/linkages, etc.).

Generally, the control device 1205 controls the signal generator 1220, the control sequencer 1210, the motor controllers 1215 and the receiver 1225 to operate in an iterative loop such that for each iteration, the control device: uses a next sequence value from each control sequence to control a corresponding motor controller (and hence, to control a corresponding motor to adjust the associated control of the audio system 1265; uses a next sequence value from the second control sequence to control the second motor controller to adjust the second motor, and hence, adjust the second control; triggers the signal generator to communicate the input signal to the audio system after the first motor and the second motor are adjusted; triggers the receiver to collect an output of the audio system; store the collected output as a unique instance; increment the next sequence value from the first control sequence; and increment the next sequence value from the second control sequence.

In operation, the control device 1205 reads control sequences (e.g., as discussed in reference to FIG. 1B) from the control sequencer 1210 (which may be implemented in either hardware or software). Using the control sequences, the control device 1205 provides instructions to the motor controllers 1215 to turn their respective motors 1230, thereby correspondingly adjusting the controls 1260 associated with the audio system 1265. As noted more fully herein, the adjustments to the controls 1260 may comprise adjusting a potentiometer, adjusting an encoder, selecting a switch position, setting a microphone to a desired position to record the output of an associated speaker cabinet (positioning a microphone along one or more axes relative to a speaker), setting a microphone to collect an environment associated with the audio system, etc.

After setting the controls 1260 according to the control sequencer 1210, the control device 1205 instructs the signal generator 1220 to provide a signal to the audio system 1265 through its input 1270 (e.g., input jack or other known input port). The audio system 1265 outputs a response through its output port 1275 and the receiver 1225 receives that response. The control device 1205 then records and stores the response.

In some embodiments, the control device 1205 analyzes the information collected by the receiver to determine a responsive behavior of the audio system 1265.

In other embodiments, the data from the system 1200 is output to a remote processing device for analysis and to generate the responsive behavior of the audio system 1265. For instance, the collected and stored data can be used as training data to train a neural network such that the neural network mimics the behavior of the audio system 1265, including the ability to mimic the behavior of the audio system 1265 not only at one "snapshot" or one configuration, but across a range of settings.

It should be appreciated that, for some embodiments, the control device 1205 can be implemented using the Raspberry Pi® processor that is described in detail with reference to FIG. 2. Similarly, the motor controller 1215 and the motors 1230 can be implemented using the motor controller and the motors shown with reference to FIGS. 2, 3A, 3B, 4, 5, or any combinations of the corresponding components described in those drawings. Likewise, the audio system 1265 and the controls 1260 can be implemented using the components shown in the embodiment of FIG. 5. As those having ordinary skill in the art will appreciate, the various components shown in FIGS. 1A through 5 can be configured as a general robotic system 1200, such as that shown in FIG. 12.

By way of an illustrative example, assume that the audio system 1265 includes two controls. Here, the control sequencer 1210 provides a first control sequence and a second control sequence, the first control sequence corresponding to a first control associated with the audio system 1265, and the second control sequence associated with a second control on the audio system 1265.

The second control is typically different from the first control, e.g., a volume control and tone control, a volume control and a bright switch, a gain control and a microphone placement relative to a speaker, etc. Regardless of control purpose, the first control sequence comprises a first sequence of values, where each value corresponds to a valid predetermined control setting for the first control. Likewise, the second control sequence comprises a second sequence of values, where each value corresponds to a valid predetermined control setting for the second control.

In some embodiments, a combination of the first sequence values and the second sequence values represents a sufficiently high number of samples to substantially determine a responsive behavior of the audio system, where the combination of the first sequence values and the second sequence values can further represent a sufficiently dense random sampling of control settings.

A first motor controller 1215 is communicatively coupled to the control sequencer 1210, for iteratively receiving each first sequence value from the control sequencer 1210. The first motor controller 1215 converts each first sequence value to a corresponding first motor setting. Here, a first motor 1230 is operatively coupled to the first motor controller 1215, the first motor 1230 being responsive to the first motor setting. As best described with reference to FIG. 2-FIG. 5, a first control coupler is (adapted to be) mechanically coupled to the first motor 1230 and the first control coupler is also (adapted to be) mechanically coupled to the first control. The first control coupler mechanically changes a first control setting of the first control in response to the first motor setting, the changing of the first control setting affecting the responsive behavior of the audio system.

Analogously, a second motor controller 1215 is communicatively coupled to the control sequencer 1210, for iteratively receiving each second sequence value from the control sequencer 1210. The second motor controller 1215 converts each second sequence value to a corresponding second motor setting. Here, a second motor 1230 is operatively coupled to the second motor controller 1215, the second motor 1230 being responsive to the second motor setting. As best described with reference to FIG. 3A-FIG. 5, a second control coupler is (adapted to be) mechanically coupled to the second motor 1230 and the second control coupler is also (adapted to be) mechanically coupled to the second control. The second control coupler mechanically changes a second control setting of the second control in response to the second motor setting, the changing of the second control setting affecting the responsive behavior of the audio system.

The signal generator 1220 provides an input signal to the audio system 1265, and the receiver 1225 receives an output signal from the audio system 1265. The output signal represents a response of the audio system 1265 to the input signal at the first control setting and the second control setting.

Analogous to that described with reference to FIG. 5, in some embodiments, a frame can interface the robotic system to the audio system 1265. Moreover, in some embodiments, the frame is an adjustable interface.

As noted more fully herein, the response of the audio system 1265 to the input signal at the various control settings can be used to train machine-learning algorithms (such as neural networks) to emulate the behavior of the audio system. For such a machine-learning emulation system, the response of the audio system serves as the ground-truth for the machine-learning emulation system. In this regard, the control device 1205 (or a remote processing device-not shown) can implement a machine-learning system for emulating the responsive behavior of the audio system. Here, the machine-learning system is trained using the input signal, the output signal, the first control sequence, and the second control sequence.

Miscellaneous

Conventional approaches to audio amplifier digitization have shortcomings. For instance, white-box modeling based on nonlinear circuit simulation represents a circuit as a system of nonlinear differential equations, which are solved using numerical methods. However, circuits with many reactive elements coupled with nonlinearities can become prohibitive computationally (and possibly impossible with current technology) to simulate in real time. In addition, the behavior of vacuum tubes and transformers is in most cases difficult to describe or approximate analytically using such methods.

A more lightweight modeling approach is to approximate the behavior of guitar amplifier stages using a combination of filtering and waveshaping. In discrete time, such approximation can be realized as an ensemble of linear time-invariant (LTI) digital filters and static nonlinear functions. However, such approaches require a combination of careful circuit analysis and empirical adjustment by signal measurements, which can be time-consuming and prone to errors.

Moreover, the combinatorial space containing the various control settings grows exponentially with the number of controls, presenting a challenge not only for the modelling, but also for the perceptual validation of the model. Manually verifying the model accuracy at a handful of control positions can only cover a tiny fraction of the control space in a reasonable amount of time. Therefore, modeling physical amplifiers at their full range of controls is not conventionally practical.

However, aspects herein provide a data-driven approach to making controllable neural audio device, e.g., guitar amplifier, models. Moreover, an automated data-collection pipeline is provided, which is suitable for physical audio, e.g., amplifier, device modeling, which facilitates the creation of a faithful model that recreates the behavior of the amplifier at all combinations of the controls, including potentiometer response curves and complex interactions between various control settings.

Notably, aspects herein do not rely upon a simulated ground truth to turn the control knob virtually. While such neural amp modeling techniques manage to capture single control settings, such approaches cannot reproduce the full range of behavior on varying amplifier controls.

The control device may be implemented in hardware, software, firmware, or a combination thereof. In the preferred embodiment(s), the control device is implemented in software or firmware that is stored in a memory and that is executed by a suitable instruction execution system. If implemented in hardware, as in an alternative embodiment, the control device can be implemented with any or a combination of the following technologies, which are all well known in the art: discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

Any process descriptions or blocks in flow charts should be understood as being executable out of order from that shown or discussed, including substantially concurrently or in reverse order, depending on the functionality involved, as would be understood by those reasonably skilled in the art of the present disclosure.

The control sequences 100 can be applied through a computer program, which comprises an ordered listing of executable instructions for implementing logical functions, can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can contain, store, communicate, propagate, or transport the program for use by or in connection with the instruction execution system, apparatus, or device. The computer-readable medium can be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection (electronic) having one or more wires, a portable computer diskette (magnetic), a random-access memory (RAM) (electronic), a read-only memory (ROM) (electronic), an erasable programmable read-only memory (EPROM or Flash memory) (electronic), an optical fiber (optical), and a portable compact disc read-only memory (CDROM) (optical). Note that the computer-readable medium could even be paper or another suitable medium upon which the program is printed, as the program can be electronically collected ed via, for instance, optical scanning of the paper or other medium, then compiled, interpreted, or otherwise processed in a suitable manner if necessary, and then stored in a computer memory.

Although example embodiments have been shown and described, it will be clear to those of ordinary skill in the art that changes, modifications, or alterations to the disclosure as described may be made. All such changes, modifications, and alterations should therefore be within the scope of the disclosure.

**Claims**

1. A process of creating a controllable responsive model of an audio system, comprising:

   generating a neural network that emulates a behavior of a reference audio system for at least two control settings of the reference audio system, comprising:
   performing for each control setting:

      receiving control position data designating a select control setting of the reference audio system as conditioning for the neural network;
      communicating an input to the reference audio system and responsive thereto, capturing a target output of the reference audio system;
      mapping parameters of the neural network such that, responsive to the input, a neural output resembles the target output of the reference audio system;
      scoring by a loss function, a similarity of the neural network output compared to the target output of the reference audio system; and
      utilizing the similarity derived from the loss function to modify model parameters of the neural network to improve the scored similarity; and

   associating the neural network with a graphical user interface that is configured to enable a user to select a virtual control setting within the graphical user interface corresponding to a select one of the at least two control settings of the reference audio system such that the neural network models the reference audio system based upon the corresponding selected control setting.

2. The process of claim 1, wherein:

the reference audio system includes at least two controls, each control capable of at least two control settings; and
generating the neural network that emulates the behavior of the reference audio system for at least two control settings further comprises:
generating the neural network to emulate the behavior of the reference audio system in at least two control settings for each control of the reference audio system.

3. The process of any of the previous claims, wherein:
generating the neural network that emulates the behavior of the reference audio system for at least two control settings, comprises:

sampling a control space at a discrete collection of control positions for each control of the reference audio system; and
training the neural network to learn to generalize a continuum of control positions between a minimum discrete control position and a maximum discrete control position for each control.

4. The process of any of the previous claims, further comprising:
training the neural network using variables grouped together as tuples, each tuple including:

an input audio segment;
a recording of the target output of the reference audio system responsive to the input audio segment, the recording used as the target for the neural output; and
control values describing the control settings of the reference audio system.

5. The process of any of the previous claims, wherein, the reference audio system includes a control capable of at least two control settings, wherein:
the control comprises a select one of:

a potentiometer or encoder, where the least two control settings span a range of successive control values;
a switch having at least two switch positions; or
a time varying control that changes over time at a slower rate than a range of intended frequencies at the input of the neural network.

6. The process of any of the previous claims, further comprising:

combining a random sampling procedure with an optimized sorting approach to determine the at least two control settings of the reference audio system;
generating all measured control configurations ahead of time into a list; and
utilizing a sorting of the list is designed to minimize the overall distance travelled.

7. The process of any of the previous claims, further comprising:

designating that the process starts and finishes recording with all controls at zero; and
finding the optimal path through random samples as a traveling salesman problem (TSP).

8. The process of any of the previous claims, further comprising:

generating nodes as a list of knob-positions-to-visit by random sampling, each knob-position-to-visit corresponding to a select node;
creating a distance matrix that is formed pair-wise for the nodes; and
approximating a traveling salesman solution on the distance matrix.

9. The process of any of the previous claims, further comprising:

selecting a starting node; and
visiting a nearest unvisited node until all nodes are visited, wherein
selecting a starting node preferably comprises all knobs at zero and/or wherein
visiting the nearest unvisited node preferably comprises looking up the nearest unvisited node in the distance matrix.

**10.** The process of any of the previous claims, wherein:

mapping parameters of the neural network such that, responsive to the input, a neural output resembles the target output of the reference audio system, comprises:
accepting an input audio segment (x) and a control value (c) describing the control settings of the reference audio system that is parameterized by network parameters $\theta$; and
scoring by the loss function, the similarity of the neural network output compared to the target output of the reference audio system, comprises:
measuring a discrepancy between the neural network output compared to the target output of the reference audio system using standard supervised learning with a stochastic gradient descent to learn the network parameters $\theta$ that minimize the average loss over a corresponding training set.

**11.** The process of any of the previous claims, further comprising adjusting the reference audio system to each control setting using a robot that physically connects to controls of the reference audio system.

**12.** A system defining a controllable responsive model of an audio system, comprising:

a first processing system configuration operatively programmed to generate a neural network that emulates a behavior of a reference audio system for at least two control settings of the reference audio system, the first processing system configuration programmed to perform, for each control setting, operations that:

receive control position data designating a select control setting of the reference audio system as conditioning for the neural network;
communicate an input to the reference audio system and responsive thereto, capture a target output of the reference audio system;
map parameters of the neural network such that, responsive to the input, a neural output resembles the target output of the reference audio system;
score by a loss function, a similarity of the neural network output compared to the target output of the reference audio system; and
utilize the similarity derived from the loss function to modify model parameters of the neural network to improve the scored similarity; and

a graphical user interface associated with a second processing system configuration, the graphical user interface associated with the neural network to enable a user to select a virtual control setting within the graphical user interface corresponding to a select one of the at least two control settings of the reference audio system such that the neural network models the reference audio system based upon the corresponding selected control setting.

**13.** The system of claim 12, wherein:

the first processing system configuration is implemented by a computer system; and
the second processing system configuration is implemented in a second computer system that is different from the first computer system.

**14.** The system of any of claims 12 to 13, wherein:
the second computer system comprises a dedicated hardware guitar effects processor that enables an instrument to be plugged directly therein for performing using the neural network at the user selected control setting.

**15.** The system of any of claims 12 to 14, wherein:

the reference audio system includes at least two controls, each control capable of at least two control settings; and
the first processing system configuration generates the neural network that emulates the behavior of the reference audio system for at least two control settings by generating the neural network to emulate the behavior of the reference audio system in at least two control settings for each control of the reference audio system.

**16.** The system of any of claims 12 to 15, wherein:
the reference audio system generates the neural network that emulates the behavior of the reference audio system by executing code that:

samples of a control space at a discrete collection of control positions for each control of the reference audio system; and

trains the neural network to learn to generalize a continuum of control positions between a minimum discrete control position and a maximum discrete control position for each control.

17. The system of any of claims 12 to 16, wherein the first processing system configuration further:

combines a random sampling procedure with an optimized sorting approach to determine the at least two control settings of the reference audio system;

generates all measured control configurations ahead of time into a list; and

utilizes a sorting of the list that is designed to minimize the overall distance travelled.

18. The process of any of claims 12 to 17, wherein the first processing system configuration further:

generates nodes as a list of knob-positions-to-visit by random sampling, each knob-position-to-visit corresponding to a select node;

creates a distance matrix that is formed pair-wise for the nodes; and

approximates a traveling salesman solution on the distance matrix.

Vol  Gain  T  M  B  MV  Rev  INPUT

SIGNAL GENERATOR

100

120

102

122

CAPTURED INFORMATION

124

128

OPTIONAL ADDITIONAL TRAINING DATA

TRAIN ANN

126

LOAD INITIALIZATION DATA INTO HARDWARE OR COMPUTER

130

108    110    112    114

104

106

FIG. 1A

FIG. 1B

GENERATE NEURAL NETWORK — 172

CONTROL SETTING? — 174

NO

YES

ASSOCIATE NEURAL NETWORK — 186

END

RECEIVE CONTROL POSITION DATA — 176

COMMUNICATE INPUT — 178

MAP PARAMETERS — 180

SCORE BY LOSS FUNCTION, SIMILARITY — 182

UTILIZE SIMILARITY — 184

170

FIG. 1C

200

| Input level | Input wav | pot0 label | pot0 target | pot1 label | pot1 target | ... | raw input wav | target wav |
|---|---|---|---|---|---|---|---|---|
| 0 | /share/Projects/... | High | 0.89 | Drive | 0.28 | ... | /share/Projects/Data... | /share/Projects/Data/... |
| -6 | /share/Projects/... | High | 0.89 | Drive | 0.28 | ... | /share/Projects/Data... | /share/Projects/Data/... |
| 0 | /share/Projects/... | High | 0.16 | Drive | 0.8 | ... | /share/Projects/Data... | /share/Projects/Data/... |
| -6 | /share/Projects/... | High | 0.16 | Drive | 0.8 | ... | /share/Projects/Data... | /share/Projects/Data/... |
| 0 | /share/Projects/... | High | 0.51 | Drive | 0.74 | ... | /share/Projects/Data... | /share/Projects/Data/... |
| -6 | /share/Projects/... | High | 0.51 | Drive | 0.74 | ... | /share/Projects/Data... | /share/Projects/Data/... |
| 0 | /share/Projects/... | High | 0.16 | Drive | 0.37 | ... | /share/Projects/Data... | /share/Projects/Data/... |

210    220    230    240   250    260    270    280

FIG. 2

FIG. 3A

EP 4 375 985 A1

FIG. 3B

FIG. 4

FIG. 5

EP 4 375 985 A1

| CONTROLS | AVERAGE WEAR | MAXIMUM WEAR | SAMPLES |
|---|---|---|---|
| 2 | 5 | 9 | 25 |
| 3 | 19 | 49 | 125 |
| 4 | 77 | 249 | 625 |
| 5 | 311 | 1 249 | 3 125 |
| 6 | 1 301 | 6 249 | 15 625 |
| 7 | 5 579 | 31 29 | 78 125 |
| 8 | 24 413 | 156 249 | 390 625 |
| 9 | 108 505 | 781 249 | 1 953 125 |
| 10 | 488 280 | 3 906 249 | 9 765 625 |

FIG. 6

| CONTROLS | AVERAGE WEAR | MAXIMUM WEAR | SAMPLES |
|---|---|---|---|
| 2 | 11 | 21 | 121 |
| 3 | 87 | 240 | 1 331 |
| 4 | 730 | 2 660 | 14 641 |
| 5 | 6 440 | 29 280 | 161 051 |
| 6 | 59 050 | 322 100 | 1 771 561 |
| 7 | 556 775 | 3 543 121 | 19 487 171 |

FIG. 7

| CONTROLS | AVERAGE WEAR | MAXIMUM WEAR | SAMPLES |
|---|---|---|---|
| 2 | 2 | 3 | 25 |
| 3 | 10 | 11 | 125 |
| 4 | 47 | 49 | 625 |
| 5 | 214 | 217 | 3 125 |

FIG. 8

NUMBER OF SAMPLES VS MECHANICAL WEAR

FIG. 9

EP 4 375 985 A1

EP 4 375 985 A1

| CONTROLS | MIN | MAX | MEAN |
|---|---|---|---|
| 2 | 0.25 | 1.25 | 0.41 |
| 3 | 0.25 | 2.25 | 0.47 |
| 4 | 0.25 | 3.25 | 0.49 |

FIG. 10

| CONTROLS | MIN | MAX | MEAN |
|---|---|---|---|
| 2 | 0.02 | 0.60 | 0.22 |
| 3 | 0.05 | 0.67 | 0.25 |
| 4 | 0.05 | 1.03 | 0.29 |

FIG. 11

FIG. 12

Europäisches
Patentamt

European
Patent Office

Office européen
des brevets

# EUROPEAN SEARCH REPORT

Application Number

EP 23 21 0132

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NARADOWSKY JASON: "Amp-Space: A Large-Scale Dataset for Fine-Grained Timbre Transformation", 2021 24TH INTERNATIONAL CONFERENCE ON DIGITAL AUDIO EFFECTS (DAFX), THE AUTHORS, 8 September 2021 (2021-09-08), pages 57-64, XP034120913, DOI: 10.23919/DAFX51585.2021.9768241 | 1-4,12, 15,16 | INV. G10H1/00 G06N3/08 G06N3/09 ADD. G10H3/18 |
| Y | * page 58, left-hand column; figure 2 * <br> * page 58, paragraph 2.1 * <br> * page 59, paragraph 2.3 * | 5,6,10, 11,13, 14,17 | |
| A | * page 59, paragraph 3 * <br> * page 60, paragraphs 3.4, 4., 4.1, 4.1.1, 4.2; table 1 * <br> * page 61, paragraph 4.2 * <br> * page 62, paragraph 5. * | 7-9,18 | |
| | ----- | | |
| Y | US 2022/262330 A1 (CASTRO BORQUEZ DOUGLAS ANDRES [FI] ET AL) 18 August 2022 (2022-08-18) | 5,6,10, 11,13, 14,17 | |
| A | * paragraph [0018] - paragraph [0031]; claim 1; figure 1 * <br> * paragraph [0032] - paragraph [0037]; figure 2 * <br> * paragraph [0038] - paragraph [0043]; figure 3 * <br> * paragraph [0044] - paragraph [0058]; figure 4 * <br> * paragraph [0059] - paragraph [0070]; figure 5 * | 7-9,18 | TECHNICAL FIELDS SEARCHED (IPC) G10H G10L G06N G06F G05B B25J |
| | ----- | | |

The present search report has been drawn up for all claims

| Place of search | Date of completion of the search | Examiner |
|---|---|---|
| Munich | 17 April 2024 | Glasser, Jean-Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 0132

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2024

| Patent document cited in search report | Publication date | Patent family member(s) | Publication date |
|---|---|---|---|
| US 2022262330 A1 | 18-08-2022 | US 2022261209 A1<br>US 2022262330 A1 | 18-08-2022<br>18-08-2022 |

For more details about this annex : see Official Journal of the European Patent Office, No. 12/82

**REFERENCES CITED IN THE DESCRIPTION**

**Patent documents cited in the description**

- US 63425606
- US 73851220